(19)

**Europäisches Patentamt**
**European Patent Office**
**Office européen des brevets**

(11)  **EP 4 708 400 A1**

(12)  # EUROPEAN PATENT APPLICATION

(43) Date of publication:
**11.03.2026  Bulletin 2026/11**

(21) Application number: **25194026.8**

(22) Date of filing: **05.08.2025**

(51) International Patent Classification (IPC):
**H01M 4/525** (2010.01)

(52) Cooperative Patent Classification (CPC):
**H01M 4/525; H01M 2004/028**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.08.2024  CN 202411191515**

(71) Applicant: **Zhuhai CosMX Battery Co., Ltd.**
**Zhuhai, Guangdong 519180 (CN)**

(72) Inventors:
- **FAN, Yanan**
  **Kingston, 519180 (CN)**
- **YANG, Wenyan**
  **Kingston, 519180 (CN)**

(74) Representative: **Murgitroyd & Company**
**165-169 Scotland Street**
**Glasgow G5 8PL (GB)**

(54)  **LITHIUM-ION SECONDARY BATTERY**

(57)  Disclosed is a lithium-ion secondary battery, where the lithium-ion secondary battery includes a positive electrode current collector, which is provided with N positive electrode tabs, $N \geq 2$, and at least a part of a functional surface of the positive electrode current collector is provided with a positive electrode functional layer including a positive electrode active material. The positive electrode active material includes a monocrystal ternary material with a chemical composition of $Li_pMe_m(Ni_xCo_yMn_z)O_2$ and a polycrystal ternary material with a chemical composition of $Li_qMe_n(Ni_aCo_bMn_c)O_2$, and the lithium-ion secondary battery satisfies $0.2 \leq (C \times N)/W \leq 7.5$, where C is a molar content of nickel of the positive electrode active material; and W is a width of the positive electrode tabs.

EP 4 708 400 A1

**Description**

**FIELD OF THE INVENTION**

The present disclosure belongs to the technical field of lithium-ion batteries, and relates to a lithium-ion secondary battery.

**BACKGROUND OF THE INVENTION**

In recent years, with advantages such as a high specific energy, a high operating voltage, a low self-discharge rate, a small volume and a light weight, lithium-ion batteries have been widely used in an energy storage power system such as a hydraulic power station, a wind power station, a thermal power station and a solar power station, as well as fields for daily life, such as electric tools, electric bikes, electric motorcycles, electric automobiles and aerospace. With the continuous expansion of lithium-ion battery applications, the market has placed higher demands on their performance, for example, higher energy density and rate performance, a wider applicable temperature range, a longer cycle life, an improved safety performance and the like.

As an important component of a lithium-ion battery, a positive electrode active material has a key function in the electrochemical performance of the lithium-ion battery. As a positive electrode material commonly used at present, there are a lithium cobaltate material, a spinel material, a polyanionic material and a ternary material that have a layered structure. Among them, a mid/high-nickel (the molar content of nickel element in transition metal elements is not less than 0.5) ternary material has a significantly-improved energy density but a lower electrical conductivity compared with other materials; Additionally, the increase of nickel content contributes to an increased energy density, but the heat generation during charge and discharge is significantly increased, which results in a reduced high-temperature cycling performance and potential safety concerns.

Therefore, a battery is provided which not only has a high energy density but also has high high-temperature cycling performance and safety performance.

**BRIEF DESCRIPTION OF THE INVENTION**

The present disclosure provides a lithium-ion secondary battery which not only has a high energy density, but also has good high-temperature cycling performance and safety performance.

The present disclosure provides a lithium-ion secondary battery, where the lithium-ion secondary battery includes a positive electrode plate; the positive electrode plate includes a positive electrode current collector provided with N positive electrode tabs, and $N \geq 2$; at least a part of the functional surface of the positive electrode current collector is provided with a positive electrode functional layer including a positive electrode active material; and the positive electrode active material includes a monocrystal ternary material and a polycrystal ternary material;

the monocrystal ternary material has a chemical composition of Formula 1,

$$Li_p Me_m (Ni_x Co_y Mn_z) O_2 \qquad \text{Formula 1}$$

in formula 1, $0.9 \leq p \leq 1.1$, $0.01 \leq m \leq 0.5$, $0.6 \leq x \leq 0.98$, $0 \leq y \leq 0.4$, $0 \leq z \leq 0.4$, and Me includes at least one of Al, Mg, Zr, B, Y, Sr, W, Ti, Nb, Mo, La, Sb or Sr;
the polycrystal ternary material has a chemical composition of Formula 2,

$$Li_q Me_n (Ni_a Co_b Mn_c) O_2 \qquad \text{Formula 2}$$

in formula 2, $0.9 \leq q \leq 1.1$, $0.01 \leq n \leq 0.5$, $0.6 \leq a \leq 0.98$, $0 \leq b \leq 0.4$, $0 \leq c \leq 0.4$, and Me includes at least one of Al, Mg, Zr, B, Y, Sr, W, Ti, Nb, Mo, La, Sb or Sr;
the lithium-ion secondary battery satisfies Formula 3,

$$0.2 \leq (C \times N)/W \leq 7.5 \qquad \text{Formula 3}$$

in formula 1, C is the molar content of nickel element in transition metal elements in the positive electrode active material; and W is the width of the positive electrode tab, in mm.

Further, the width W of the positive electrode tab is 3 mm-10 mm, and/or the N is 2-60.

Further, the median particle size Dv50 of the monocrystal ternary material is less than the median particle size Dv50 of the polycrystal ternary material; and

preferably, the median particle size Dv50 of the monocrystal ternary material is 1 μm-8 μm, and/or, the median particle size Dv50 of the polycrystal ternary material is 8 μm-18 μm.

Further, the particle size of primary particles in the polycrystal ternary material is 200 nm-800 nm, and/or, the median particle size Dv50 of the positive electrode active material is 2 μm-15 μm.

Further, the positive electrode active material includes, in mass content percentage: 10 wt%-90 wt% of the monocrystal ternary material and 10 wt%-90 wt% of the polycrystal ternary material.

Further, the positive electrode current collector includes a positive electrode current collector matrix and an extension, the extension is located on one side of the positive electrode current collector matrix, the extension forms the positive electrode tabs, and at least a part of the functional surface of the positive electrode current collector matrix is provided with the positive electrode functional layer.

Further, the lithium/nickel mixing ratio in the monocrystal ternary material are 0.15%-5%, and/or, the lithium/nickel mixing ratio in the polycrystal ternary material are 0.5%-8%.

Further, the positive electrode functional layer includes a positive electrode active layer and an inorganic coating adjacent to each other, and the inorganic coating is located between the positive electrode active layer and the positive electrode tab;

preferably, the width of the inorganic coating is 0.5 mm-5 mm, and/or, the thickness of the inorganic coating is 2 μm-25 μm; and

preferably, the inorganic coating comprises at least one of boehmite, $BaSO_4$, $CaSiO_3$, $CaSiO_4$, $Al_2O_3$ or $TiO_2$.

Further, the lithium-ion secondary battery satisfies Formula 4 and/or Formula 5,

$$0.2 \leq (H \times D_2)/D_1 \leq 10 \quad \text{Formula 4}$$

in formula 4, H is the thickness of the inorganic coating, $D_1$ is the particle size Dv99 of the monocrystal ternary material, $H \geq D_1$, and $D_2$ is the median particle size Dv50 of the inorganic material;

$$5 \leq B/A \leq 300 \quad \text{Formula 5}$$

in formula 5, A is the orthographic projection area of the inorganic coating on the positive electrode current collector, and B is the area of the positive electrode plate; and

preferably, the particle size Dv99 of the monocrystal ternary material is 6 μm-12 μm, and/or, the median particle size Dv50 of the inorganic material is 0.2 μm-4 μm.

Further, the lithium-ion secondary battery further comprises a separator, the separator comprises a substrate and a coating, and the coating comprises a polymer layer and/or a ceramic layer;

preferably, the thickness of the substrate is 3 μm-10 μm, and/or, the thickness of the coating is 1 μm-7 μm;

preferably, the thickness of the polymer layer is 0.5 μm-4 μm, and/or, the thickness of the ceramic layer is 0.5 μm-3 μm; and

preferably, the areal density of the separator is 3 g/m$^2$-20 g/m$^2$.

Further, the lithium-ion secondary battery further includes an electrolyte, and the electrolyte includes a nitrile additive;

preferably, the electrolyte satisfies Formula 6,

$$1 \leq E/F \leq 17 \quad \text{Formula 6}$$

in formula 6, E is the mass content percentage of the nitrile additive in the electrolyte, in wt%; F is the molar content of the nickel element in the transition metal elements in the positive electrode active material (same concept with C);

preferably, the content E by mass percentage of the nitrile additive in the electrolyte is 1 wt%-10 wt%; and

preferably, the nitrile additive includes at least one of succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,5-dioxa-pimelonitrile, 1,4-di(cyanoethoxy)butane, ethylene glycol di(2-cyanoethyl)ether, diethylene glycol di(2-cyanoethyl)ether, triethylene glycol di(2-cyanoethyl) ether, tetraethylene glycol di(2-cyanoethyl)ether, 3,6,9,12,15,18-hexaoxaeicosanoic acid dinitrile, 1,3-bis(2-cyanoethoxy)propane, 1,4-bis(2-cyanoethoxy)butane, 1,5-bis(2-cyanoethoxy)pentane, ethylene glycol di(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 1,3,5-pentanetricarbonitrile, 1,2,3-propanetricarbonitrile, 1,3,6-hexanetricarbonitrile, glycerol tricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane and 1,2,5-tris(cyanoethoxy)pentane.

Further, the lithium-ion secondary battery includes a cell formed by sequentially stacking and winding a positive electrode plate, a separator and a negative electrode plate;
and/or, the lithium-ion secondary battery includes sequentially-stacked cells, and the cell includes a positive electrode plate, a separator and a negative electrode plate that are sequentially stacked.

In the present disclosure, multiple (N $\geq$ 2) positive electrode tabs are provided on the positive electrode current collector, and the positive electrode active material includes both a monocrystal ternary material with a chemical composition of Formula 1 and a polycrystal ternary material with a chemical composition of Formula 2, so that the high-temperature cycling performance and safety of a battery with a mid/high-nickel ternary positive electrode material system can be effectively improved.

## BRIEF DESCRIPTION OF THE DRAWINGS

FIG. 1 is a schematic structural view of a positive electrode plate in one embodiment of the present disclosure;
FIG. 2 is a schematic structural view of a positive electrode plate in another embodiment of the present disclosure;

Reference to the signs in drawings:

1-positive electrode current collector matrix;
2-extension;
3-positive electrode tab;
11-inorganic coating;
12-positive electrode active layer..

## DETAILED DESCRIPTIONS OF THE EMBODIMENTS

In order to make the objects, technical solutions and advantages of the present disclosure clearer, the technical solutions in the embodiments of the present disclosure will be clearly and completely described below in conjunction with the embodiments of the disclosure. Apparently, the described embodiments are some, rather than all, of the embodiments of the disclosure. Based on the embodiments in the present disclosure, all other embodiments obtained by those of ordinary skill in the art without involving creative effort belong to the scope of protection of the present disclosure.

The present disclosure provides a lithium-ion secondary battery, and the lithium-ion secondary battery includes a positive electrode plate; the positive electrode plate includes a positive electrode current collector provided with N positive electrode tabs, and N $\geq$ 2; at least a part of a functional surface of the positive electrode current collector is provided with a positive electrode functional layer including a positive electrode active material; the positive electrode active material includes a monocrystal ternary material and a polycrystal ternary material;

the monocrystal ternary material has a chemical composition of Formula 1,

$$Li_pMe_m(Ni_xCo_yMn_z)O_2 \qquad \text{Formula 1}$$

in formula 1, $0.9 \leq p \leq 1.1$, $0.01 \leq m \leq 0.5$, $0.6 \leq x \leq 0.98$, $0 \leq y \leq 0.4$, $0 \leq z \leq 0.4$, and Me includes at least one of Al, Mg, Zr, B, Y, Sr, W, Ti, Nb, Mo, La, Sb or Sr;

the polycrystal ternary material has a chemical composition of Formula 2,

$$Li_qMe_n(Ni_aCo_bMn_c)O_2 \qquad \text{Formula 2}$$

in formula 2, $0.9 \leq q \leq 1.1$, $0.01 \leq n \leq 0.5$, $0.6 \leq a \leq 0.98$, $0 \leq b \leq 0.4$, $0 \leq c \leq 0.4$, and Me includes at least one of Al, Mg, Zr, B, Y, Sr, W, Ti, Nb, Mo, La, Sb or Sr;
the lithium-ion secondary battery satisfies Formula 3,

$$0.2 \leq (C \times N)/W \leq 7.5 \qquad \text{Formula 3}$$

in formula 3, C is the molar content of nickel element in transition metal elements in the positive electrode active material; and W is the width of the positive electrode tab, in mm. C has a unit of 1. Namely, the decimal format is introduced into the formula to participate in the calculation. For example, if C equals 80%, 0.8 is input into the formula.

The transition metal elements in the present disclosure refers to Ni, Co and Mn.

In one embodiment, Me includes one of Al, Mg, Zr, B, Y, Sr, W, Ti, Nb, Mo, La, Sb or Sr.

In one embodiment, Me includes two or more of Al, Mg, Zr, B, Y, Sr, W, Ti, Nb, Mo, La, Sb or Sr. In such an embodiment, m (in the case of a single - crystal ternary material) or n (in the case of a polycrystal ternary material) equals the sum total of the subscripts of the aforesaid two or more elements.

In the present disclosure, multiple (at least 2) positive electrode tabs are provided on the positive electrode current collector, and the positive electrode active material includes both a monocrystal ternary material with a chemical composition of Formula 1 and a polycrystal ternary material with a chemical composition of Formula 2, so that the high-temperature cycling performance and safety of a battery with a mid/high-nickel ternary positive electrode material system from lithium-ion secondary batteries can be significantly improved. Based on this phenomenon, the inventors analyzed the improvement in the cycling performance and safety at a high temperature, and considered that the reasons may be as follows: when the chemical compositions of the monocrystal ternary material and the polycrystal ternary material satisfy Formulas 1 and 2, the monocrystal ternary material and the polycrystal ternary material cooperate synergistically, which can effectively reduce the occurrence of a side reaction between the positive electrode material and the electrolyte, thereby reducing the capacity loss and heat generated by the side reaction; Additionally, multiple positive electrode tabs are provided on the positive electrode current collector, ensuring that the heat generated by a mid/high nickel positive electrode active material during charge and discharge can be rapidly conducted, for rapid heat dissipation, which effectively reduces the temperature increase of the battery under high-rate charge and discharge, and thus reduces the battery temperature and avoids the occurrence of thermal runaway; Therefore, the lithium-ion secondary battery of the present disclosure can comprehensively improve the high-temperature cycling performance and safety of battery while ensuring a high energy density of battery.

Additionally, the multiple positive electrode tabs are also conducive to dispersing current density and reducing the polarization of system during charge and discharge, thereby effectively improving the discharge performance of battery at a low temperature.

Further, the monocrystal ternary material and/or the polycrystal ternary material further includes a coating layer, each of the coating layers of the monocrystal ternary material and polycrystal ternary material independently includes at least one of a metal fluoride, a metal oxide, a metal borate compound and a metal phosphate compound. The side reaction between the positive electrode active material and the electrolyte can be further reduced to further improve the cycling performance of the battery.

In a specific embodiment, the width W of the positive electrode tab is 3 mm-10 mm. For example, the width W is 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, or 10 mm. When the width W of the positive electrode tab is in the aforementioned range, the problem of lithium precipitation caused by the excessively large current density at the positive electrode tab can be avoided, and a better heat dissipation effect can also be achieved, thereby improving the safety of the battery; Additionally, a high energy density can be guaranteed, and the risk of the contact of positive electrode tab with negative electrode tab is reduced, which further improves the battery safety.

In a specific embodiment, N is 2-60. For example, the number N is 2, 5, 10, 15, 20, 25, 30, 35, 40, 45, 50, 55 or 60. When the lithium-ion secondary battery satisfies Formula 1 and the number N of positive electrode tabs is in the aforementioned range, not only a good heat dissipation can be realized to further improve the high-temperature cycling performance and safety of battery, but also a good distribution of current density can be realized to improve the discharge performance of battery at a low temperature; Additionally, the energy density loss can be reduced.

In a specific embodiment, the median particle size Dv50 of the monocrystal ternary material is less than the median particle size Dv50 of the polycrystal ternary material. In this case, the side reaction between the positive electrode active material and the electrolyte can be further reduced, thereby further reducing the capacity loss and heat generated by the side reaction.

The median particle size Dv50 in the present disclosure refers to a particle size value corresponding to a cumulative particle size distribution percentage reaching 50%, which can be measured by a laser particle size instrument. It can also be measured by means of observation. For example, on the scanning image of the surface of the positive electrode active layer obtained by SEM, draw the square or rectangle with the smallest area that completely encloses a single - crystal ternary material or a polycrystalline ternary material (a material generally considered to have no grain boundaries and no agglomeration is a single - crystal ternary material) particle, that is, draw a square or rectangle where the edge of the particle touches the four sides of the square or rectangle. The length of one side of the square or the length of the long side of the rectangle is the particle size. In an arbitrarily selected $100\mu m \times 100\mu m$ area on the surface of the positive electrode active layer, measure any 100 single - crystal ternary materials or polycrystalline ternary materials, count and create a particle size distribution curve. In the particle size distribution curve, the particle size of the particle corresponding to when the cumulative particle size distribution reaches 50% is the median particle size Dv50. It should be noted that when 100 target particles can be observed in the captured image, a particle size distribution curve is created based on the statistics of the particle sizes of any 100 positive electrode secondary particles in this image. When less than 100 target particles are observed in the image, multiple images are captured, and a particle size distribution curve is created based on the statistics of the particle sizes of a total of 100 target particles. Among them, the scanning image can be obtained by observing the surface of the coating using a scanning electron microscope (S - 3400N, manufactured by Hitachi, Ltd.).

Preferably, the median particle size Dv50 of the monocrystal ternary material is 1 $\mu$m-8 $\mu$m. For example, the median particle size Dv50 is 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m or 8 $\mu$m. In such a range, the monocrystal ternary material has small particles, which is conducive to further improving the lithium-ion transport rate and improving the discharge performance of the battery at a low temperature; Additionally, the risk of piercing the separator caused by the excessively large particles of the monocrystal ternary material can be avoided, and the safety performance of the battery can be further improved.

Preferably, the median particle size Dv50 of the polycrystal ternary material is 8 $\mu$m-18 $\mu$m. For example, the median particle size Dv50 is 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m or 18 $\mu$m. In such a range, the side reaction between the electrolyte and the positive electrode active material during charge and discharge can be further reduced, so that the battery has high high-temperature cycling performance and safety. Additionally, such range is conducive to improving the transport of lithium ions inside particles, thereby improving the discharge performance of the battery at a low temperature.

In a specific embodiment, the median particle size Dv50 of the primary particles in the polycrystal ternary material is 200 nm-800 nm. For example, the median particle size Dv50 of primary particle is 200 nm, 250 nm, 300 nm, 350 nm, 400 nm, 450 nm, 500 nm, 550 nm, 600 nm, 650 nm, 700 nm, 750 nm or 800 nm. Such a range helps to shorten the diffusion path of the lithium ions, further improving the discharge performance of the battery at a low temperature.

The particle size of the primary particle in the present disclosure can be measured by a laser particle size instrument or a scanning electron microscope (SEM).

In a specific embodiment, the median particle size Dv50 of the positive electrode active material is 2 $\mu$m-15 $\mu$m. For example, the median particle size Dv50 of the positive electrode active material is 2 $\mu$m, 4 $\mu$m, 6 $\mu$m, 8 $\mu$m, 10 $\mu$m, 12 $\mu$m, 14 $\mu$m or 15 $\mu$m. Such a range helps to further shorten the diffusion path of the lithium ions during charge and discharge, guarantee the diffusion rate at a low temperature, and improve the discharge performance of the battery at a low temperature.

In a specific embodiment, the positive electrode active material includes, in mass content percentage: 10 wt%-90 wt% of a monocrystal ternary material and 10 wt%-90 wt% of a polycrystal ternary material. In such a range, a better synergistic effect of the monocrystal ternary material and polycrystal ternary material can be realized, the occurrence of side reaction can be further reduced, and heat generation can be reduced, and thereby the battery has higher safety and high-temperature cycling performance. Additionally, the diffusion path of the lithium ions can be further shortened, and thereby the battery has higher rate performance and low-temperature discharge performance. Moreover, in such a range, the capacity per gram of the discharge of the battery can be effectively improved.

In one embodiment, the positive electrode active material consists of monocrystal ternary materials and polycrystal ternary materials.

In one embodiment, based on the total weight of the monocrystal ternary material and the polycrystal ternary material, the content of the monocrystal ternary material is 10wt% - 90wt%, and that of the polycrystal ternary material is 10wt% - 90wt%.

In a specific embodiment, the positive electrode current collector includes a positive electrode current collector matrix and an extension, the extension is located on one side of the positive electrode current collector matrix, the extension forms the positive electrode tabs, and at least a part of the functional surface of the positive electrode current collector matrix is provided with a positive electrode functional layer.

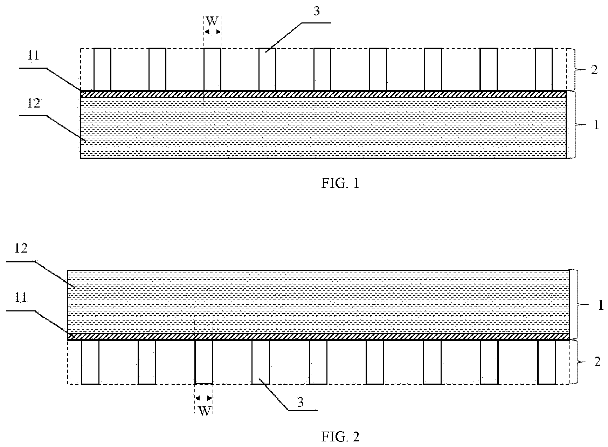

In particular, FIG. 1 is a schematic structural view of a positive electrode plate in one embodiment, and FIG. 2 is a schematic structural view of a positive electrode plate in another embodiment. As shown in FIG. 1 and FIG. 2, the positive electrode current collector includes a positive electrode current collector matrix 1 and an extension 2 connected to each other, the extension 2 is located on one side of the positive electrode current collector matrix 1, the extension 2 forms the positive electrode tabs 3, and at least a part of surfaces of the positive electrode current collector matrix 1 is provided with a positive electrode functional layer.

In the present disclosure, there are no particular limitation on the manner in which the positive electrode tab 3 is formed, and it can be formed by, for example die cutting.

In a specific embodiment, the lithium/nickel mixing ratio in the monocrystal ternary material is 0.15%-5%, and/or, the lithium/nickel mixing ratio in the polycrystal ternary material is 0.5%-8%. For example, the lithium/nickel mixing ratio in the monocrystal ternary material is 0.15%, 0.5%, 1.0%, 1.5%, 2.0%, 2.5%, 3.0%, 3.5%, 4.0%, 4.5%, or 5.0%; and the lithium/nickel mixing ratio in the polycrystal ternary material is 0.5%, 1.0%, 1.5%, 2.0%, 2.5%, 3.0%, 3.5%, 4.0%, 4.5%, 5.0%, 5.5%, 6.0%, 6.5%, 7.0%, 7.5%, or 8.0%. In such a range, not only the high rate performance and high-temperature cycling performance of the lithium-ion secondary battery can be realized, but also the transformation from a layered structure to a spinel structure and even a rock salt phase structure can be effectively mitigated, the capacity fade can be mitigated, and the initial coulomb efficiency of the battery can be improved. Additionally, it is also possible to further reduce the occurrence of side reaction between the positive electrode active material and the electrolyte, and in cooperation with the multi-tab structure of the positive electrode plate, it is possible to perform efficient heat conduction and heat dissipation, thereby further improving the high-temperature cycling performance and safety of the battery.

The lithium/nickel mixing ratio in the present disclosure is measured by an X-ray diffractometer (XRD), and specifically, the positive electrode active material is subjected to XRD testing to obtain an XRD pattern, in which the ratio of the peak intensity of the (003) diffraction peak to that of the (104) diffraction peak is the lithium/nickel mixing ratio in the positive electrode active material.

In a specific embodiment, the positive electrode functional layer includes a positive electrode active layer and an inorganic coating adjacent to each other, and the inorganic coating is located between the positive electrode active layer and the positive electrode tab.

Preferably, the width of the inorganic coating is 0.5 mm-5 mm, and/or, the thickness of the inorganic coating is 2 $\mu$m-25 $\mu$m.

Preferably, the inorganic coating includes at least one of boehmite, $BaSO_4$, $CaSiO_3$, $CaSiO_4$, $Al_2O_3$ or $TiO_2$.

For example, the width of the inorganic coating is 0.5 mm, 1.0 mm, 1.5 mm, 2.0 mm, 2.5 mm, 3.0 mm, 3.5 mm, 4.0 mm, 4.5 mm or 5.0 mm; and the thickness of the inorganic coating is 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm or 25 mm.

It is noted that the thickness of the inorganic coating in the present disclosure refers to the thickness of the coating on one surface only.

Specifically, as shown in FIG. 1 and FIG. 2, the positive electrode functional layer includes a positive electrode active layer 12 and an inorganic coating 11 adjacent to each other, and the inorganic coating 11 is located between the positive electrode active layer 12 and the positive electrode tab 3. Specifically, there is no overlap of the positive electrode active layer 12 and the inorganic coating 11 in the thickness direction of the positive electrode plate, that is, the positive electrode active layer 12 is disposed on a part of surface of the positive electrode current collector, and the inorganic coating 11 is disposed on a part of surface of the positive electrode current collector.

Preferably, there is an overlap between the inorganic coating and the positive electrode active layer, where the inorganic coating is located on the surface of positive electrode active layer facing away from the positive electrode current collector.

Specifically, in one embodiment, the positive electrode active layer 12 is disposed on a part of the surface of the positive electrode current collector, and the inorganic coating 11 is disposed on a part of the surface of the positive electrode current collector and a part of the surface of the positive electrode active layer. In another embodiment, the positive electrode active layer 12 is disposed on a part of the surface of the positive electrode current collector, and the inorganic coating 11 is disposed on a part of the surface of the positive electrode active layer.

The hardness of the monocrystal ternary material particles in the positive electrode active material is high, so during rolling, an excessively large pressure may cause the particles to be pressed into foil. After the electrode plate is wound into a cell, the part of particles embedded in the foil may easily result in the break of the foil under the action of winding tension, thereby leading to risks such as cell deformation and safety failure. In contrast, by disposing an inorganic coating between the positive electrode active layer and the positive electrode tab, such risk can be effectively eliminated. Additionally, since the multi-tab structure is used in the present disclosure, a relatively large number of burrs may be generated in the process of tab cutting, and during the actual use, these burrs may pierce the separator, posing a risk of safety failure. By introducing an inorganic coating in the positive electrode functional layer, the thermal runaway caused by the burrs generated during tab cutting can be effectively avoided, and the safety of battery can be improved.

Further, when the width of the inorganic coating is in the aforementioned range, the extent to which the monocrystal particles are embedded in the foil can be reduced to lower the risk of foil break; additionally, it can be further guaranteed that the burrs generated during tab cutting will not pierce the separator, raising safety concerns; furthermore, the energy density loss can be reduced.

Further, when the thickness of the inorganic coating is in the aforementioned range, the extent to which the monocrystal particles are embedded in the foil can be effectively improved, and thereby the risk of foil break is further lowered, the risk that the separator may be pierced by the large particles in the positive electrode active layer can be effectively lowered, the safety can be improved, and the energy density loss can be reduced.

In a specific embodiment, the lithium-ion secondary battery satisfies Formula 4,

$$0.2 \leq (H \times D_2)/D_1 \leq 10 \quad \text{Formula 4}$$

in formula 4, H is the thickness of the inorganic coating, $D_1$ is the particle size Dv99 of the monocrystal ternary material, $H \geq D_1$, and $D_2$ is the median particle size Dv50 of the inorganic material.

The Dv99 in the present disclosure refers to a particle size value corresponding to a cumulative particle size distribution percentage reaching 99%, which can be measured by a laser particle size instrument.

When the lithium-ion secondary battery satisfies Formula 4, the inorganic coating, the monocrystal ternary material and the nonpolar material particles can cooperate synergistically. As a result, the problem that the large-particle ternary material included in the positive electrode active material protrudes and pierces the separator thereby raising safety risks can be avoided. Additionally the inorganic coating also has a good isolating effect to avoid interaction during the tab die cutting. Furthermore the energy density loss can be further reduced, thereby effectively improving the safety of the battery while maintaining a high energy density.

In a specific embodiment, the lithium-ion secondary battery satisfies Formula 5,

$$5 \leq B/A \leq 300 \quad \text{Formula 5}$$

in formula 5, A is the area of the orthographic projection of the inorganic coating on the positive electrode current collector, and B is the area of the positive electrode plate.

The area of the positive electrode plate in the present disclosure refers to the area excluding the tabs.

The introduction of the inorganic coating will increase the polarization of the battery system to some extent, and the increase in the area of the polarized layer will result in decreased discharge performance of battery system at a low temperature. Additionally, the introduction of the inorganic coating also leads to the energy density loss of the cell. When the lithium-ion secondary battery satisfies Formula 5, the monocrystal ternary material and the inorganic coating may cooperate synergistically to effectively reduce the extent of polarization caused by the inorganic coating, improve the discharge performance of battery system at a low temperature, and compensate for the energy density loss of the cell.

In a specific embodiment, the particle size Dv99 of the monocrystal ternary material is 6 $\mu$m-12 $\mu$m. For example, the particle size Dv99 is 6 $\mu$m, 7 $\mu$m, 8 $\mu$m, 9 $\mu$m, 10 $\mu$m, 11 $\mu$m, or 12 $\mu$m. If the particle size Dv99 of the monocrystal ternary material is in the aforementioned range while the lithium-ion secondary battery satisfies Formula 4, the diffusion path of the lithium ions during charge and discharge can be effectively shortened, thereby not only ensuring a high safety of battery, but also enabling the battery to have a higher discharge performance at a low temperature.

In a specific embodiment, the median particle size Dv50 of the inorganic material is 0.2 $\mu$m-4 $\mu$m. For example, the median particle size Dv50 is 0.2 $\mu$m, 0.5 $\mu$m, 1.0 $\mu$m, 1.5 $\mu$m, 2.0 $\mu$m, 2.5 $\mu$m, 3.0 $\mu$m, 3.5 $\mu$m, or 4.0 $\mu$m. If the median particle size Dv50 of the inorganic material is in the aforementioned range while the lithium-ion secondary battery satisfies Formula 2, the risk that the positive electrode active material may pierce the separator can be further reduced.

In a specific embodiment, the lithium-ion secondary battery further includes a separator, the separator includes a substrate and a coating, and the coating includes a polymer layer and/or a ceramic layer.

Preferably, the thickness of the substrate is 3 $\mu$m-10 $\mu$m, and/or, the thickness of the coating is 1 $\mu$m-7 $\mu$m.

Preferably, the thickness of the polymer layer is 0.5 $\mu$m-4 $\mu$m, and/or, the thickness of the ceramic layer is 0.5 $\mu$m-3 $\mu$m.

Preferably, the areal density of the separator is 3 g/m$^2$-20 g/m$^2$.

For example, the thickness of the substrate is 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m, 8 $\mu$m, 8.5 $\mu$m, 9 $\mu$m, 9.5 $\mu$m, or 10 $\mu$m.

For example, the thickness of the coating is 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, 5.5 $\mu$m, 6 $\mu$m, 6.5 $\mu$m, or 7 $\mu$m.

For example, the thickness of the polymer layer is 0.5 $\mu$m, 1.0 $\mu$m, 1.5 $\mu$m, 2.0 $\mu$m, 2.5 $\mu$m, 3.0 $\mu$m, 3.5 $\mu$m, or 4 $\mu$m.

For example, the thickness of the ceramic layer is 0.5 $\mu$m, 1.0 $\mu$m, 1.5 $\mu$m, 2.0 $\mu$m, 2.5 $\mu$m, or 3.0 $\mu$m.

For example, the areal density of the separator is 3 g/m$^2$, 5 g/m$^2$, 7 g/m$^2$, 9 g/m$^2$, 11 g/m$^2$, 13 g/m$^2$, 15 g/m$^2$, 17 g/m$^2$, 19 g/m$^2$, or 20 g/m$^2$.

The thickness of the coating, the thickness of the polymer layer and the thickness of the ceramic layer in the present disclosure all refer to the thickness on one side only.

By including a coating, the separator can have an effectively-improved thermal stability and mechanical strength, thus preventing short-circuit in a high-temperature environment. Additionally, the resistance of separator to piercing can be effectively improved, and thereby the risk that the monocrystal particles may pierce the separator due to its excessively high hardness is further reduced. Additionally, the problem that the burrs generated during multi-tab cutting will pierce the separator can be effectively avoided, the risk of cell short-circuit is further lowered, and the safety of battery is improved.

Further, when the thicknesses of the substrate and coating in the separator, the thicknesses of the polymer layer and ceramic layer in the coating, and the areal density of the separator are in the aforementioned ranges, the thermal stability and mechanical strength of the separator can be further improved, and thereby the problem of short-circuit at a high temperature can be avoided. Additionally, the separator has a higher resistance to piercing, and thereby the risk that the separator may be pierced can be further avoided, and the battery can have a higher safety.

The substrate in the present disclosure is preferably any one of a polyolefin-based polymer film, a glass fiber film, a polytetrafluoroethylene film, a cellulose film, a polyimide film, a polyamide film, spandex and an aramid film; where the polyolefin-based polymer film is preferably any one of polyethylene, polypropylene, an ethylene/butylene copolymer, and an ethylene/methacrylate copolymer.

The polymer in the polymer layer in the present disclosure is preferably any one of polymethylmethacrylate, polyvinylidene fluoride, a polyvinylidene fluoride-hexafluoropropylene copolymer, a polyvinylidene fluoride-chlorotrifluoroethylene copolymer and polyoxyethylene.

The inorganic material in the ceramic layer in the present disclosure is preferably boehmite, $Mg(OH)_2$, $Al_2O_3$, $SiO_2$, $TiO_2$, ZnO, MgO, CaO, $ZrO_2$, MnO and $WO_3$.

In a specific embodiment, the lithium-ion secondary battery further includes an electrolyte including a nitrile additive. By including a nitrile additive and allowing the nitrile additive and the positive electrode active material to cooperate synergistically, a stable CEI protective film can be formed on the positive electrode surface during charge and discharge, which can effectively suppress the dissolution of transition metal ions and avoid the occurrence of the side reaction between the electrolyte and the positive electrode active material, thereby further reducing the heat generation from the side reaction, improving the high-temperature cycling performance, and improving the safety performance of the cell.

Preferably, the mass content percentage of the nitrile additive in the electrolyte is 1 wt%-10 wt%. When the mass content percentage of the nitrile additive in the electrolyte is in the aforementioned range, a better cooperation with the positive electrode active material can be realized, and the formation of a thick and stable CEI film on the positive electrode surface is facilitated without causing an increase in the internal impedance of the battery or damaging the SEI film of the negative electrode, which can effectively improve the cycling performance of battery.

Preferably, the electrolyte satisfies Formula 6,

$$1 \le E/F \le 17 \quad \text{Formula 6}$$

in formula 6, E is the mass content percentage of the nitrile additive in the electrolyte, in wt%; and F is the molar content of nickel in transition metal elements in the positive electrode active material.

In such a range, the synergistic effect of the nitrile additive and the ternary positive electrode active material can be further enhanced, the formation of the CEI film on one surface of the positive electrode can be promoted, and the uniformity and denseness of the CEI film can be improved, the dissolution of transition metal ions (especially Mn ions) during charge and discharge can be better avoided, and the structural stability of the positive electrode active material can be improved, thereby effectively mitigating capacity fade. Additionally, a further reduction in the occurrence of side reaction between the positive electrode material and the electrolyte can be facilitated, thereby reducing the problem of gas generation caused by solvent decomposition, decreasing heat production during the operation of battery, and improving the safety of battery.

Preferably, the content E by mass percentage of the nitrile additive in the electrolyte is 1 wt%-10 wt%. For example, the mass content percentage is 1 wt%, 2 wt%, 3 wt%, 4 wt%, 5 wt%, 6 wt%, 7 wt%, 8 wt%, 9 wt%, or 10 wt%. When the electrolyte satisfies Formula 6 and the nitrile additive is further in the aforementioned range, a better synergy of the nitrile additive and the positive electrode active material can be realized, the dissolution of transition metal ions (especially Mn ions) can be further suppressed, and the capacity fade can be reduced. Additionally, the occurrence of side reaction can be further reduced, enabling the battery to have a higher cycling performance and safety performance.

Preferably, the nitrile additive includes at least one of succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,5-dioxa-pimelonitrile, 1,4-di(cyanoethoxy)butane, ethylene glycol di(2-cyanoethyl)ether, diethylene glycol di(2-cyanoethyl)ether, triethylene glycol di(2-cyanoethyl) ether, tetraethylene glycol di(2-cyanoethyl)ether, 3,6,9,12,15,18-hexaoxaeicosanoic acid dinitrile, 1,3-bis(2-cyanoethoxy)propane, 1,4-bis(2-cyanoethoxy)butane, 1,5-bis(2-cyanoethoxy)pentane, ethylene glycol di(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 1,3,5-pentanetricarbonitrile, 1,2,3-propanetricarbonitrile, 1,3,6-hexanetricarbonitrile, glycerol tricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane and 1,2,5-tris(cyanoethoxy)pentane.

When the nitrile additive includes two or more specific compounds mentioned above, the ratio between the specific compounds is not particularly limited in the present disclosure.

In a specific embodiment, the lithium-ion secondary battery includes a cell formed by sequentially stacking and winding a positive electrode plate, a separator and a negative electrode plate;

and/or, the lithium-ion secondary battery includes sequentially-stacked cells, and the cell includes a positive electrode plate, a separator and a negative electrode plate that are sequentially stacked.

The present disclosure will be further explained with reference to specific examples and comparative examples. Unless otherwise stated, the reagents, materials and instruments used in the following description are all conventional reagents, conventional materials and conventional instruments, and are all commercially available. The reagents and materials involved may also be synthesized by conventional synthesis methods. Parameters related to particle size (for example, Dv50, Dv99) are obtained through testing with a laser particle size analyzer.

Example 1

1) Preparation of monocrystal ternary material: $LiOH \cdot H_2O$, $Ni(OH)_2$, $Co(OH)_2$, $Mn(OH)_2$ and NaOH were mixed to obtain a mixed material, where the molar ratio of $LiOH \cdot H_2O$, $TM(OH)_2$ to NaOH was 1.5 : 1 : 0.5, TM was Ni, Co and Mn, and the molar ratio of Ni, Co to Mn was 0.88 : 0.06 : 0.06. Then, $Al_2O_3$, $Y_2O_3$ and $ZrO_2$ were added to the mixed material, where the percentage by mass of $Al_2O_3$ in the mixed material was 0.4 wt%, the percentage by mass of $Y_2O_3$ in the mixed material was 0.3 wt%, and the percentage by mass of $ZrO_2$ in the mixed material was 0.8 wt%, where n(Li/TM) was 1 : 1.05. The "TM" here refers to the sum of the molar amounts of Ni, Co and Mn. The raw material after mixing was placed in an oxygen atmosphere, and heated at a rate of 5°C/min to 450°C for sintering, and maintained at the temperature for 12 h, and then cooled naturally to room temperature and crushed, and then added with $Li_3BO_3$ and then heated to 350°C, and maintained at the temperature for 3 h; finally, followed by crushing and sieving to obtain the monocrystal ternary material of this example, with a Dv50 of 3 $\mu$m, a Dv99 of 7.5 $\mu$m and a chemical composition of $Li_{0.978}(Al_{0.008}Y_{0.006}Zr_{0.008})(Ni_{0.88}Co_{0.06}Mn_{0.06})O_2$.

2) Preparation of polycrystal ternary material: $LiOH \cdot H_2O$, $Ni(OH)_2$, $Co(OH)_2$, $Mn(OH)_2$ and NaOH were mixed to obtain a mixed material, where the molar ratio of $LiOH \cdot H_2O$, $TM(OH)_2$ to NaOH was 1.5 : 1 : 0.5, "TM" was Ni, Co and Mn; and the molar ratio of Ni, Co to Mn was 0.8 : 0.1 : 0.1. Then, $Al_2O_3$ was added to the mixed material, and the percentage by mass of $Al_2O_3$ in the mixed material was 0.2 wt%, where n(Li/TM) was 1 : 1.045, where TM was Ni, Co and Mn. The raw material after mixing was placed in an oxygen atmosphere, and heated at a rate of 5°C/min to 550°C for sintering, and maintained at the temperature for 15 h, and then naturally cooled to room temperature and crushed, and then added with $Li_3BO_3$, and then heated to 350°C, and maintained at the temperature for 3 h; finally, followed by crushing and sieving to obtain the polycrystal ternary material of this example, with a chemical composition of $Li_{0.996}(Al_{0.004})(Ni_{0.8}Co_{0.1}Mn_{0.1})O_2$ and a Dv50 of 13.5 $\mu$m. The median particle size Dv50 of the primary particles was 450 nm.

3) Preparation of positive electrode plate The monocrystal ternary material and polycrystal ternary material prepared above were physically mixed in a mass ratio of 1 : 1 to obtain a positive electrode active material with a Dv50 of 8.3 $\mu$m. The positive electrode active material, a binder of polyvinylidene fluoride (PVDF), a conducting agent of carbon black, and a conducting agent of carbon tube were added to N-methylpyrrolidone (NMP) in a weight ratio of 95 : 1.5 : 1.5 : 2, and stirred under the action of a vacuum mixer, until the mixed system became a positive electrode slurry with a uniform flowability.

An inorganic material of $Al_2O_3$ with a Dv50 of 2.0 $\mu$m was mixed with a binder of polyvinylidene fluoride and a solvent of N-methylpyrrolidone in a ratio of 98 : 2 to obtain an inorganic slurry.

The positive electrode slurry and inorganic slurry prepared above were placed in two separate material dispensing holes, and applied together onto the coating area of an aluminum foil with uncoated foil areas left at the edge in the width direction of the current collector for subsequent tab cutting. Then, baking was sequentially performed under a temperature gradient of 70°C, 80°C, 95°C, 120°C and 120°C, and drying was performed in an oven at 120°C for 8 h, and then roller-pressing and cutting were performed to obtain the positive electrode plate of this example with a compacted density of 3.75 g/cm$^3$, where the inorganic coating had a thickness of 8 $\mu$m and a width of 3 mm.

The positive electrode plate obtained above was die-cut at the uncoated foil areas using a tab die, so as to obtain a positive electrode plate provided with tabs, where the positive electrode tabs had a consistent width of 6 mm, and the number of the tabs was 22.

4) Preparation of negative electrode plate A negative electrode active material of graphite, a thickener of sodium carboxymethylcellulose (CMC-Na), a binder of a styrene butadiene rubber, and a conducting agent of acetylene black were mixed in a weight ratio of 97 : 1 : 1 : 1, and then added with deionized water and mixed by a vacuum mixer to obtain a negative electrode slurry. The negative electrode slurry was uniformly applied onto a carbon-coated copper foil with uncoated foil areas left at the edge in the width direction of the current collector for subsequent tab cutting. and then the foil was air-dried at room temperature and transferred to an oven at 80°C for 10 h of drying, and then subjected to roller-pressing and cutting to obtain a negative electrode plate with a compacted density of 1.7 g/cm$^3$.

The negative electrode plate obtained above was die-cut at the uncoated foil areas using a tab die, to obtain a negative electrode plate provided with tabs, where the negative electrode tabs had a consistent width of 6 mm, and the number of tabs was 22.

5) A conventional commercial separator, a substrate of polyethylene, a ceramic layer of $Al_2O_3$, and a polymer layer of PVDF were used, where the functional surfaces on both sides of a 5 $\mu$m thick substrate were respectively provided with a 1 $\mu$m thick ceramic layer and a polymer layer, and then the outer surface of the ceramic layer was provided with a polymer layer, such that the two polymer layers had the same thickness, the total thickness was 1.5 $\mu$m, and the areal density of the separator was 5.8 g/m$^2$.

6) In a glove box filled with an inert gas (argon) ($H_2O < 0.1$ ppm, and $O_2 < 0.1$ ppm), ethylene carbonate, propylene carbonate, diethyl carbonate and propyl propionate were mixed until uniform in a mass percentage of 15 wt% : 10 wt% : 10 wt% : 65 wt%, and then a fully-dried lithium hexafluorophosphate ($LiPF_6$) (with a molar concentration of 1.25 mol/L) was rapidly added therein, dissolved in the non-aqueous organic solvent and stirred well, and finally a succinonitrile additive was added, and the mass content percentage of the succinonitrile in the electrolyte was controlled to be 5 wt%. After passing the moisture and free acid tests, the electrolyte of this example was obtained.

7) Preparation of lithium-ion secondary battery The prepared positive electrode plate, the separator and the negative electrode plate were sequentially stacked, and the separator was placed between the positive electrode plate and the negative electrode plate, and wound to obtain a cell, where the positive electrode tab positions and the negative electrode tab positions were aligned, respectively, so as to obtain a bare coil core with a multi-tab coil structure. The bare cell was placed in an outer packaging foil, and the aforementioned electrolyte was injected into the cell in a glove box, and then vacuum-packaging, leaving to stand, forming, shaping, sorting and other steps were performed to finally obtain a pouch lithium-ion secondary battery with a capacity of 3.5 Ah.

Example 2

The method for preparing a lithium-ion secondary battery in this example was substantially the same as that in Example 1, except that in step 2), the nickel content in the polycrystal ternary material was adjusted to 0.6, and specifically the chemical composition was $Li_{0.996}(Al_{0.004})(Ni_{0.6}Co_{0.2}Mn_{0.2})O_2$.

Example 3

The method for preparing a lithium-ion secondary battery in this example was substantially the same as that in Example 1, except that in step 2), the nickel content in the polycrystal ternary material was adjusted to 0.7, and specifically the chemical composition was $Li_{0.996}(Al_{0.004})(Ni_{0.7}Co_{0.1}Mn_{0.2})O_2$.

Example 4

The method for preparing a lithium-ion secondary battery in this example was substantially the same as that in Example 1, except that in step 2), the nickel content in the polycrystal ternary material was adjusted to 0.98, and specifically the chemical composition was $Li_{0.996}(Al_{0.004})(Ni_{0.98}Co_{0.01}Mn_{0.01})O_2$.

Example 5

The method for preparing a lithium-ion secondary battery in this example was substantially the same as that in Example 1, except that in step 1), the nickel content in the monocrystal ternary material was adjusted to 0.6, and specifically the chemical composition was $Li_{0.978}(Al_{0.008}Y_{0.006}Zr_{0.008})(Ni_{0.6}Co_{0.2}Mn_{0.2})O_2$.

Example 6

The method for preparing a lithium-ion secondary battery in this example was substantially the same as that in Example 1, except that in step 1), the nickel content in the monocrystal ternary material was adjusted to 0.7, and specifically the chemical composition was $Li_{0.978}(Al_{0.008}Y_{0.006}Zr_{0.008})(Ni_{0.7}Co_{0.2}Mn_{0.2})O_2$.

Example 7

The method for preparing a lithium-ion secondary battery in this example was substantially the same as that in Example 1, except that in step 1), the nickel content in the monocrystal ternary material was adjusted to 0.9, and specifically the chemical composition was $Li_{0.978}(Al_{0.008}Y_{0.006}Zr_{0.008})(Ni_{0.9}Co_{0.05}Mn_{0.05})O_2$.

Example 8

The method for preparing a lithium-ion secondary battery in this example was substantially the same as that in Example 1, except that in step 1), the nickel content in the monocrystal ternary material was adjusted to 0.98, and specifically the chemical composition was $Li_{0.978}(Al_{0.008}Y_{0.006}Zr_{0.008})(Ni_{0.98}Co_{0.01}Mn_{0.01})O_2$.

Example 9

The method for preparing the lithium-ion secondary battery in this example was substantially the same as that in Example 1, except that in step 3), the mass content percentage of the monocrystal ternary material in the positive electrode active material was adjusted to 60 wt%, and the mass content percentage of polycrystal ternary material was adjusted to 40 wt%.

Example 10

The method for preparing the lithium-ion secondary battery in this example was substantially the same as that in Example 1, except that in step 3), the mass content percentage of the monocrystal ternary material in the positive electrode active material was adjusted to 70 wt%, and the mass content percentage of polycrystal ternary material was adjusted to 30 wt%.

Example 11

The method for preparing the lithium-ion secondary battery in this example was substantially the same as that in Example 1, except that in step 3), the mass content percentage of the monocrystal ternary material in the positive electrode active material was adjusted to 90 wt%, and the mass content percentage of polycrystal ternary material was adjusted to 10 wt%.

Example 12

The method for preparing the lithium-ion secondary battery in this example was substantially the same as that in Example 1, except that in step 3), the mass content percentage of the monocrystal ternary material in the positive electrode active material was adjusted to 10 wt%, and the mass content percentage of polycrystal ternary material was adjusted to 90 wt%.

Example 13

The method for preparing a lithium-ion secondary battery in this example was substantially the same as that in Example 1, except that in step 1), the Dv50 of the monocrystal ternary material was adjusted to 1 $\mu$m, and the Dv99 was adjusted to 6 $\mu$m.

Example 14

The method for preparing a lithium-ion secondary battery in this example was substantially the same as that in Example 1, except that in step 1), the Dv50 of the monocrystal ternary material was adjusted to 5 $\mu$m, and the Dv99 was adjusted to 10 $\mu$m;
and in step 3), the thickness of the inorganic coating was adjusted to 12 $\mu$m.

Example 15

The method for preparing a lithium-ion secondary battery in this example was substantially the same as that in Example 1, except that in step 1), the Dv50 of the monocrystal ternary material was adjusted to 8 $\mu$m, and the Dv99 was adjusted to 12 $\mu$m;
and in step 3), the thickness of the inorganic coating was adjusted to 13 $\mu$m.

Example 16

The method for preparing a lithium-ion secondary battery in this example was substantially the same as that in Example 1, except that in step 2), the Dv50 of the polycrystal ternary material was adjusted to 8 $\mu$m.

Example 17

The method for preparing a lithium-ion secondary battery in this example was substantially the same as that in Example 1, except that in step 2), the Dv50 of the polycrystal ternary material was adjusted to 10 $\mu$m.

Example 18

The method for preparing a lithium-ion secondary battery in this example was substantially the same as that in Example 1, except that in step 2), the Dv50 of the polycrystal ternary material was adjusted to 15 $\mu$m.

Example 19

The method for preparing a lithium-ion secondary battery in this example was substantially the same as that in Example 1, except that in step 2), the Dv50 of the polycrystal ternary material was adjusted to 18 $\mu$m.

Example 20

The method for preparing a lithium-ion secondary battery in this example was substantially the same as that in Example 1, except that in step 2), the Dv50 of the polycrystal ternary material was adjusted to 200 $\mu$m.

Example 21

The method for preparing a lithium-ion secondary battery in this example was substantially the same as that in Example 1, except that in step 2), the Dv50 of the polycrystal ternary material was adjusted to 800 $\mu$m.

Example 22

The method for preparing a lithium-ion secondary battery in this example was substantially the same as that in Example 1, except that in step 3), the width of the positive electrode tab was adjusted to 3 mm.

Example 23

The method for preparing a lithium-ion secondary battery in this example was substantially the same as that in Example 1, except that in step 3), the width of the positive electrode tab was adjusted to 8 mm.

Example 24

The method for preparing a lithium-ion secondary battery in this example is substantially the same as that in Example 1, except that in step 3), the number N of the positive electrode tabs was adjusted to 2.

Example 25

The method for preparing a lithium-ion secondary battery in this example is substantially the same as that in Example 1, except that in step 3), the number N of the positive electrode tabs was adjusted to 15.

Example 26

The method for preparing a lithium-ion secondary battery in this example is substantially the same as that in Example 1, except that in step 3), the number N of the positive electrode tabs was adjusted to 30.

Example 27

The method for preparing a lithium-ion secondary battery in this example is substantially the same as that in Example 1, except that in step 3), the width of the inorganic coating was adjusted to 0.5 mm.

Example 28

The method for preparing a lithium-ion secondary battery in this example is substantially the same as that in Example 1, except that in step 3), the width of the inorganic coating was adjusted to 2 mm.

Example 29

The method for preparing a lithium-ion secondary battery in this example is substantially the same as that in Example 1, except that in step 3), the width of the inorganic coating was adjusted to 5 mm.

Example 30

The method for preparing a lithium-ion secondary battery in this example is substantially the same as that in Example 1, except that in step 3), the width of the inorganic coating was adjusted to 6 mm.

Example 31

The method for preparing a lithium-ion secondary battery in this example is substantially the same as that in Example 1, except that in step 3), the width of the inorganic coating was adjusted to 25 mm.

Example 32

The method for preparing a lithium-ion secondary battery in this example is substantially the same as that in Example 1, except that in step 3), the Dv50 of the inorganic material was adjusted to 0.2 $\mu$m.

Example 33

The method for preparing a lithium-ion secondary battery in this example is substantially the same as that in Example 1, except that in step 3), the Dv50 of the inorganic material was adjusted to 4 $\mu$m.

Example 34

The method for preparing a lithium-ion secondary battery in this example is substantially the same as that in example 1, except that in step 6), the mass content percentage of the succinonitrile in the electrolyte was adjusted to 1 wt%.

Example 35

The method for preparing a lithium-ion secondary battery in this example is substantially the same as that in example 1, except that in step 6), the mass content percentage of the succinonitrile in the electrolyte was adjusted to 10 wt%.

Example 36

The method for preparing a lithium-ion secondary battery in this example is substantially the same as that in example 1, except that in step 6), the succinonitrile was replaced with 1,5-dicyanopentane.

Example 37

The method for preparing a lithium-ion secondary battery in this example is substantially the same as that in example 1, except that in step 6), the succinonitrile was replaced with tetramethylsuccinonitrile.

Example 38

The method for preparing a lithium-ion secondary battery in this example is substantially the same as that in example 1, except that in step 6), the succinonitrile was replaced with 1,4-dicyanopentane.

Example 39

The method for preparing a lithium-ion secondary battery in this example is substantially the same as that in example 1, except that in step 6), the succinonitrile was replaced with 1,2-dicyanobenzene.

Example 40

The method for preparing a lithium-ion secondary battery in this example was substantially the same as that in Example 1, except that in Step 1), the Dv50 of the monocrystal ternary material was adjusted to 8.5 $\mu$m, and the Dv99 was adjusted to 15 $\mu$m;
and in step 3), the thickness of the inorganic coating was adjusted to 20 $\mu$m.

Example 41

The method for preparing a lithium-ion secondary battery in this example was substantially the same as that in Example 1, except that in step 2), the Dv50 of the polycrystal ternary material was adjusted to 20 $\mu$m, where the Dv50 of the primary particles was adjusted to 950 nm.

Example 42

The method for preparing a lithium-ion secondary battery in this example is substantially the same as that in example 1, except that in step 1), the lithium/nickel mixing ratio in the monocrystal ternary material was adjusted to 6%.

Example 43

The method for preparing a lithium-ion secondary battery in this example was substantially the same as that in Example 1, except that in step 2), the lithium/nickel mixing ratio in the polycrystal ternary material was adjusted to 9%.

Example 44

The method for preparing a lithium-ion secondary battery in this example is substantially the same as that in Example 1, except that in step 3), no inorganic coating was disposed in the positive electrode functional layer.

Example 45

The method for preparing a lithium-ion secondary battery in this example is substantially the same as that in Example 1, except that in step 3), the width of the inorganic coating was adjusted to 0.2 mm.

Example 46

The method for preparing a lithium-ion secondary battery in this example is substantially the same as that in Example 1, except that in step 3), the thickness of the inorganic coating was adjusted to 4 $\mu$m.

Example 47

The method for preparing a lithium-ion secondary battery in this example was substantially the same as that in Example 1, except that in step 1), the D99 of the monocrystal ternary material was adjusted to 6 $\mu$m;
and in step 3), the Dv50 of the inorganic material was adjusted to 3 $\mu$m, and the thickness of the inorganic coating was

adjusted to 20 $\mu$m.

Example 48

The method for preparing a lithium-ion secondary battery in this example was substantially the same as that in Example 1, except that in step 1), the D99 of the monocrystal ternary material was adjusted to 6 $\mu$m; and in step 3), the width of the inorganic coating was adjusted to 10 mm.

Example 49

The method for preparing a lithium-ion secondary battery in this example was substantially the same as that in Example 1, except that in step 1), the Dv99 of the monocrystal ternary material was adjusted to 13.5 $\mu$m; and in step 3), the thickness of the inorganic coating was adjusted to 15 $\mu$m.

Example 50

The method for preparing a lithium-ion secondary battery in this example is substantially the same as that in Example 1, except that in step 6), the mass content percentage of the succinonitrile in the electrolyte was adjusted to 12 wt%.

Example 51

The method for preparing a lithium-ion secondary battery in this example was substantially the same as that in Example 1, except that in step 3), the mass content percentage of the monocrystal ternary material in the positive electrode active material was adjusted to 8 wt%, and the mass content percentage of the polycrystal ternary material was adjusted to 92 wt%.

Example 52

The method for preparing a lithium-ion secondary battery in this example was substantially the same as that in Example 1, except that in step 3), the mass content percentage of the monocrystal ternary material in the positive electrode active material was adjusted to 92 wt%, and the mass content percentage of the polycrystal ternary material was adjusted to 8 wt%.

Example 53

The method for preparing a lithium-ion secondary battery in this example was substantially the same as that in Example 1, except that in step 2), the Dv50 of the primary particles of the polycrystal ternary material was adjusted to 1 $\mu$m.

Example 54

The method for preparing a lithium-ion secondary battery in this example was substantially the same as that in Example 1, except that in step 2), the Dv50 of the monocrystal ternary material was adjusted to 12 $\mu$m, and the Dv99 was adjusted to 18 $\mu$m, and the Dv50 of the polycrystal ternary material was adjusted to 10 $\mu$m.

Example 55

The method for preparing a lithium-ion secondary battery in this example was substantially the same as that in Example 1, except that the Dv50 of the positive electrode active substance after mixing was adjusted to 17.2 $\mu$m, and at this time the particle size Dv50 of the monocrystal ternary material was 10 $\mu$m, and the Dv99 was 16.3 $\mu$m, and the Dv50 of the polycrystal ternary material was 25 $\mu$m.

Example 56

The method for preparing a lithium-ion secondary battery in this example was substantially the same as that in Example 1, except that the monocrystal ternary material has a chemical formula of $Li_{0.978}(Al_{0.008}Y_{0.006}Zr_{0.008})(Ni_{0.9}Co_{0.05}Mn_{0.05})O_2$. the polycrystal ternary material has a chemical formula of $Li_{0.996}(Al_{0.004})(Ni_{0.9}Co_{0.05}Mn_{0.05})O_2$. and the content of the nitrile additive in the electrolyte was 0.5%.

Example 57

The method for preparing a lithium-ion secondary battery in this embodiment is substantially the same as that in Example 1, except that the thickness of the inorganic coating was adjusted to 25 $\mu$m, and the median particle size Dv50 of the inorganic material was adjusted to 4 $\mu$m.

Comparative example 1

The method for preparing a lithium-ion secondary battery in this comparative example was substantially the same as that in Example 1, except that in step 3), the positive electrode active material was replaced with the monocrystal ternary material prepared in step 1), excluding polycrystal ternary material.

Comparative example 2

The method for preparing a lithium-ion secondary battery in this comparative example was substantially the same as that in Example 1, except that in step 3), the positive electrode active material was replaced with the polycrystal ternary material prepared in step 2), excluding monocrystal ternary material.

Comparative example 3

The method for preparing a lithium-ion secondary battery in this comparative example was substantially the same as that in Example 1, except that in step 3), only the edge of the positive electrode plate was provided with one tab; and in step 4), only the edge of the negative electrode plate was provided with one tab.

Comparative example 4

The method for preparing a lithium-ion secondary battery in this example is substantially the same as that in Example 1, except that in step 3), the width of the positive electrode tab was adjusted to 2 mm.

The specific parameters were shown in Table 1-1 and Table 1-2. The nickel content of the positive electrode active material means the molar content of nickel element in transition metal elements in the positive electrode active material.

Table 1-1

| | Nickel content of monocryst al ternary material | Dv50 of monocryst al ternary material ($\mu$m) | Dv99 of monocryst al ternary material ($\mu$m) | Lithium/ni ckel mixing ratio in monocryst al ternary material % | Nickel content of polycrystal ternary material | Dv50 of polycrystal ternary material ($\mu$m) | Dv50 of primary particle nm |
|---|---|---|---|---|---|---|---|
| Example 1 | 0.88 | 3 | 7.5 | 1.05 | 0.8 | 13.5 | 450 |
| Example 2 | 0.88 | 3 | 7.5 | 1.05 | 0.6 | 13.5 | 450 |
| Example 3 | 0.88 | 3 | 7.5 | 1.05 | 0.7 | 13.5 | 450 |
| Example 4 | 0.88 | 3 | 7.5 | 1.05 | 0.98 | 13.5 | 450 |
| Example 5 | 0.6 | 3 | 7.5 | 0.15 | 0.8 | 13.5 | 450 |
| Example 6 | 0.7 | 3 | 7.5 | 0.28 | 0.8 | 13.5 | 450 |
| Example 7 | 0.9 | 3 | 7.5 | 2.6 | 0.8 | 13.5 | 450 |
| Example 8 | 0.98 | 3 | 7.5 | 5 | 0.8 | 13.5 | 450 |
| Example 9 | 0.88 | 3 | 7.5 | 1.05 | 0.8 | 13.5 | 450 |
| Example 10 | 0.88 | 3 | 7.5 | 1.05 | 0.8 | 13.5 | 450 |
| Example 11 | 0.88 | 3 | 7.5 | 1.05 | 0.8 | 13.5 | 450 |
| Example 12 | 0.88 | 3 | 7.5 | 1.05 | 0.8 | 13.5 | 450 |
| Example 13 | 0.88 | 1 | 6 | 1.05 | 0.8 | 13.5 | 450 |

(continued)

| | Nickel content of monocryst al ternary material | Dv50 of monocryst al ternary material (μm) | Dv99 of monocryst al ternary material (μm) | Lithium/ni ckel mixing ratio in monocryst al ternary material % | Nickel content of polycrystal ternary material | Dv50 of polycrystal ternary material (μm) | Dv50 of primary particle nm |
|---|---|---|---|---|---|---|---|
| Example 14 | 0.88 | 5 | 10 | 1.05 | 0.8 | 13.5 | 450 |
| Example 15 | 0.88 | 8 | 12 | 1.05 | 0.8 | 13.5 | 450 |
| Example 16 | 0.88 | 3 | 7.5 | 1.05 | 0.8 | 8 | 450 |
| Example 17 | 0.88 | 3 | 7.5 | 1.05 | 0.8 | 10 | 450 |
| Example 18 | 0.88 | 3 | 7.5 | 1.05 | 0.8 | 15 | 450 |
| Example 19 | 0.88 | 3 | 7.5 | 1.05 | 0.8 | 18 | 450 |
| Example 20 | 0.88 | 3 | 7.5 | 1.05 | 0.8 | 13.5 | 200 |
| Example 21 | 0.88 | 3 | 7.5 | 1.05 | 0.8 | 13.5 | 800 |
| Example 22 | 0.88 | 3 | 7.5 | 1.05 | 0.8 | 13.5 | 450 |
| Example 23 | 0.88 | 3 | 7.5 | 1.05 | 0.8 | 13.5 | 450 |
| Example 24 | 0.88 | 3 | 7.5 | 1.05 | 0.8 | 13.5 | 450 |
| Example 25 | 0.88 | 3 | 7.5 | 1.05 | 0.8 | 13.5 | 450 |
| Example 26 | 0.88 | 3 | 7.5 | 1.05 | 0.8 | 13.5 | 450 |
| Example 27 | 0.88 | 3 | 7.5 | 1.05 | 0.8 | 13.5 | 450 |
| Example 28 | 0.88 | 3 | 7.5 | 1.05 | 0.8 | 13.5 | 450 |
| Example 29 | 0.88 | 3 | 7.5 | 1.05 | 0.8 | 13.5 | 450 |
| Example 30 | 0.88 | 3 | 7.5 | 1.05 | 0.8 | 13.5 | 450 |
| Example 31 | 0.88 | 3 | 7.5 | 1.05 | 0.8 | 13.5 | 450 |
| Example 32 | 0.88 | 3 | 7.5 | 1.05 | 0.8 | 13.5 | 450 |
| Example 33 | 0.88 | 3 | 7.5 | 1.05 | 0.8 | 13.5 | 450 |
| Example 34 | 0.88 | 3 | 7.5 | 1.05 | 0.8 | 13.5 | 450 |
| Example 35 | 0.88 | 3 | 7.5 | 1.05 | 0.8 | 13.5 | 450 |
| Example 36 | 0.88 | 3 | 7.5 | 1.05 | 0.8 | 13.5 | 450 |
| Example 37 | 0.88 | 3 | 7.5 | 1.05 | 0.8 | 13.5 | 450 |
| Example 38 | 0.88 | 3 | 7.5 | 1.05 | 0.8 | 13.5 | 450 |
| Example 39 | 0.88 | 3 | 7.5 | 1.05 | 0.8 | 13.5 | 450 |
| Example 40 | 0.88 | 8.5 | 15 | 1.05 | 0.8 | 13.5 | 450 |
| Example 41 | 0.88 | 3 | 7.5 | 1.05 | 0.8 | 20 | 950 |
| Example 42 | 0.88 | 3 | 7.5 | 6 | 0.8 | 13.5 | 450 |
| Example 43 | 0.88 | 3 | 7.5 | 1.05 | 0.8 | 13.5 | 450 |
| Example 44 | 0.88 | 3 | 7.5 | 1.05 | 0.8 | 13.5 | 450 |
| Example 45 | 0.88 | 3 | 7.5 | 1.05 | 0.8 | 13.5 | 450 |
| Example 46 | 0.88 | 3 | 7.5 | 1.05 | 0.8 | 13.5 | 450 |
| Example 47 | 0.88 | 3 | 6.0 | 1.05 | 0.8 | 13.5 | 450 |
| Example 48 | 0.88 | 3 | 6.0 | 1.05 | 0.8 | 13.5 | 450 |
| Example 49 | 0.88 | 3 | 13.5 | 1.05 | 0.8 | 13.5 | 450 |

(continued)

| | Nickel content of monocrystal ternary material | Dv50 of monocrystal ternary material (μm) | Dv99 of monocrystal ternary material (μm) | Lithium/nickel mixing ratio in monocryst al ternary material % | Nickel content of polycrystal ternary material | Dv50 of polycrystal ternary material (μm) | Dv50 of primary particle nm |
|---|---|---|---|---|---|---|---|
| Example 50 | 0.88 | 3 | 7.5 | 1.05 | 0.8 | 13.5 | 450 |
| Example 51 | 0.88 | 3 | 7.5 | 1.05 | 0.8 | 13.5 | 450 |
| Example 52 | 0.88 | 3 | 7.5 | 1.05 | 0.8 | 13.5 | 450 |
| Example 53 | 0.88 | 3 | 7.5 | 1.05 | 0.8 | 13.5 | 1000 |
| Example 54 | 0.88 | 12 | 18 | 1.05 | 0.8 | 10 | 450 |
| Example 55 | 0.88 | 10 | 16.3 | 1.05 | 0.8 | 25 | 450 |
| Example 56 | 0.9 | 3 | 7.5 | 1.24 | 0.8 | 13.5 | 450 |
| Example 57 | 0.88 | 3 | 7.5 | 1.05 | 0.8 | 13.5 | 450 |
| Comparative example 1 | 0.88 | 3 | 7.5 | 1.05 | / | / | / |
| Comparative example 2 | / | / | / | / | 0.8 | 13.5 | 450 |
| Comparative example 3 | 0.88 | 3 | 7.5 | 1.05 | 0.8 | 13.5 | 450 |
| Comparative example 4 | 0.88 | 3 | 7.5 | 1.05 | 0.8 | 13.5 | 450 |

Table 1-2

| | Lithium/nickel mixing ratio in polycrystal ternary material % | Percentage of monocrystal ternary material wt% | Percentage of polycrystal ternary material wt% | Nickel content of positive electrode active material | Dv50 of positive electrode active material (μm) | Content of nitrile additive % |
|---|---|---|---|---|---|---|
| Example 1 | 4.5 | 50 | 50 | 0.84 | 8.3 | 5 |
| Example 2 | 0.5 | 50 | 50 | 0.74 | 8.3 | 5 |
| Example 3 | 1.5 | 50 | 50 | 0.79 | 8.3 | 5 |
| Example 4 | 8.0 | 50 | 50 | 0.93 | 8.3 | 5 |
| Example 5 | 4.5 | 50 | 50 | 0.7 | 8.3 | 5 |
| Example 6 | 4.5 | 50 | 50 | 0.75 | 8.3 | 5 |
| Example 7 | 4.5 | 50 | 50 | 0.85 | 8.3 | 5 |
| Example 8 | 4.5 | 50 | 50 | 0.89 | 8.3 | 5 |
| Example 9 | 4.5 | 60 | 40 | 0.85 | 7 | 5 |
| Example 10 | 4.5 | 70 | 30 | 0.86 | 6.3 | 5 |
| Example 11 | 4.5 | 90 | 10 | 0.87 | 4.5 | 5 |
| Example 12 | 4.5 | 10 | 90 | 0.81 | 12.8 | 5 |
| Example 13 | 4.5 | 50 | 50 | 0.84 | 7.4 | 5 |
| Example 14 | 4.5 | 50 | 50 | 0.84 | 9.2 | 5 |

(continued)

| | Lithium/nickel mixing ratio in polycrystal ternary material % | Percentage of monocrystal ternary material wt% | Percentage of polycrystal ternary material wt% | Nickel content of positive electrode active material | Dv50 of positive electrode active material (μm) | Content of nitrile additive % |
|---|---|---|---|---|---|---|
| Example 15 | 4.5 | 50 | 50 | 0.84 | 11.0 | 5 |
| Example 16 | 4.5 | 50 | 50 | 0.84 | 5.5 | 5 |
| Example 17 | 4.5 | 50 | 50 | 0.84 | 6.5 | 5 |
| Example 18 | 4.5 | 50 | 50 | 0.84 | 9 | 5 |
| Example 19 | 4.5 | 50 | 50 | 0.84 | 10.8 | 5 |
| Example 20 | 4.5 | 50 | 50 | 0.84 | 8.3 | 5 |
| Example 21 | 4.5 | 50 | 50 | 0.84 | 8.3 | 5 |
| Example 22 | 4.5 | 50 | 50 | 0.84 | 8.3 | 5 |
| Example 23 | 4.5 | 50 | 50 | 0.84 | 8.3 | 5 |
| Example 24 | 4.5 | 50 | 50 | 0.84 | 8.3 | 5 |
| Example 25 | 4.5 | 50 | 50 | 0.84 | 8.3 | 5 |
| Example 26 | 4.5 | 50 | 50 | 0.84 | 8.3 | 5 |
| Example 27 | 4.5 | 50 | 50 | 0.84 | 8.3 | 5 |
| Example 28 | 4.5 | 50 | 50 | 0.84 | 8.3 | 5 |
| Example 29 | 4.5 | 50 | 50 | 0.84 | 8.3 | 5 |
| Example 30 | 4.5 | 50 | 50 | 0.84 | 8.3 | 5 |
| Example 31 | 4.5 | 50 | 50 | 0.84 | 8.3 | 5 |
| Example 32 | 4.5 | 50 | 50 | 0.84 | 8.3 | 5 |
| Example 33 | 4.5 | 50 | 50 | 0.84 | 8.3 | 5 |
| Example 34 | 4.5 | 50 | 50 | 0.84 | 8.3 | 1 |
| Example 35 | 4.5 | 50 | 50 | 0.84 | 8.3 | 10 |
| Example 36 | 4.5 | 50 | 50 | 0.84 | 8.3 | 5 |
| Example 37 | 4.5 | 50 | 50 | 0.84 | 8.3 | 5 |
| Example 38 | 4.5 | 50 | 50 | 0.84 | 8.3 | 5 |
| Example 39 | 4.5 | 50 | 50 | 0.84 | 8.3 | 5 |
| Example 40 | 4.5 | 50 | 50 | 0.84 | 11.2 | 5 |
| Example 41 | 4.5 | 50 | 50 | 0.84 | 12 | 5 |
| Example 42 | 4.5 | 50 | 50 | 0.84 | 8.3 | 5 |
| Example 43 | 9 | 50 | 50 | 0.84 | 8.3 | 5 |
| Example 44 | 4.5 | 50 | 50 | 0.84 | 8.3 | 5 |
| Example 45 | 4.5 | 50 | 50 | 0.84 | 8.3 | 5 |
| Example 46 | 4.5 | 50 | 50 | 0.84 | 8.3 | 5 |
| Example 47 | 4.5 | 50 | 50 | 0.84 | 8.3 | 5 |
| Example 48 | 4.5 | 50 | 50 | 0.84 | 8.3 | 5 |
| Example 49 | 4.5 | 50 | 50 | 0.84 | 8.3 | 5 |
| Example 50 | 4.5 | 50 | 50 | 0.84 | 8.3 | 12 |

(continued)

|  | Lithium/nickel mixing ratio in polycrystal ternary material % | Percentage of monocrystal ternary material wt% | Percentage of polycrystal ternary material wt% | Nickel content of positive electrode active material | Dv50 of positive electrode active material (μm) | Content of nitrile additive % |
|---|---|---|---|---|---|---|
| Example 51 | 4.5 | 8 | 92 | 0.81 | 13.4 | 5 |
| Example 52 | 4.5 | 92 | 8 | 0.87 | 3.8 | 5 |
| Example 53 | 4.5 | 50 | 50 | 0.84 | 8.3 | 5 |
| Example 54 | 4.5 | 50 | 50 | 0.84 | 11.7 | 5 |
| Example 55 | 4.5 | 10 | 90 | 0.81 | 17.2 | 5 |
| Example 56 | 6.0 | 50 | 50 | 0.9 | 8.3 | 0.5 |
| Example 57 | 4.5 | 50 | 50 | 0.84 | 8.3 | 5 |
| Comparative example 1 | / | 100 | / | 0.88 | 3 | 5 |
| Comparative example 2 | 4.5 | / | 100 | 0.80 | 13.5 | 5 |
| Comparative example 3 | 4.5 | 50 | 50 | 0.84 | 8.3 | 5 |
| Comparative example 4 | 4.5 | 50 | 50 | 0.84 | 8.3 | 5 |

Table 2

|  | Dv50 of inorganic material (μm) | Thickness of inorganic coating (μm) | Width of inorganic coating (mm) | Width of positive electrode tab (mm) | Number of positive electrode tabs | $(C \times N)/W$ | $(H \times D_2)/D_1$ | B/A | E/F |
|---|---|---|---|---|---|---|---|---|---|
| Example 1 | 2 | 8 | 3.0 | 6 | 22 | 3.1 | 2.1 | 33.4 | 6.0 |
| Example 2 | 2 | 8 | 3.0 | 6 | 22 | 2.7 | 2.1 | 33.4 | 6.8 |
| Example 3 | 2 | 8 | 3.0 | 6 | 22 | 2.9 | 2.1 | 33.4 | 6.3 |
| Example 4 | 2 | 8 | 3.0 | 6 | 22 | 3.4 | 2.1 | 33.4 | 5.4 |
| Example 5 | 2 | 8 | 3.0 | 6 | 22 | 2.6 | 2.1 | 33.4 | 7.1 |
| Example 6 | 2 | 8 | 3.0 | 6 | 22 | 2.8 | 2.1 | 33.4 | 6.7 |
| Example 7 | 2 | 8 | 3.0 | 6 | 22 | 3.1 | 2.1 | 33.4 | 5.9 |
| Example 8 | 2 | 8 | 3.0 | 6 | 22 | 3.3 | 2.1 | 33.4 | 5.6 |
| Example 9 | 2 | 8 | 3.0 | 6 | 22 | 3.1 | 2.1 | 33.4 | 5.9 |
| Example 10 | 2 | 8 | 3.0 | 6 | 22 | 3.2 | 2.1 | 33.4 | 5.8 |
| Example 11 | 2 | 8 | 3.0 | 6 | 22 | 3.2 | 2.1 | 33.4 | 5.7 |
| Example 12 | 2 | 8 | 3.0 | 6 | 22 | 3.0 | 2.1 | 33.4 | 6.2 |
| Example 13 | 2 | 8 | 3.0 | 6 | 22 | 3.1 | 2.7 | 33.4 | 6.0 |
| Example 14 | 2 | 12 | 3.0 | 6 | 22 | 3.1 | 2.4 | 33.4 | 6.0 |
| Example 15 | 2 | 13 | 3.0 | 6 | 22 | 3.1 | 2.2 | 33.4 | 6.0 |
| Example 16 | 2 | 8 | 3.0 | 6 | 22 | 3.1 | 2.1 | 33.4 | 6.0 |
| Example 17 | 2 | 8 | 3.0 | 6 | 22 | 3.1 | 2.1 | 33.4 | 6.0 |
| Example 18 | 2 | 8 | 3.0 | 6 | 22 | 3.1 | 2.1 | 33.4 | 6.0 |
| Example 19 | 2 | 8 | 3.0 | 6 | 22 | 3.1 | 2.1 | 33.4 | 6.0 |

(continued)

| | Dv50 of inorganic material (μm) | Thickness of inorganic coating (μm) | Width of inorganic coating (mm) | Width of positive electrode tab (mm) | Number of positive electrode tabs | (C × N)/W | (H × D₂)/D₁ | B/A | E/F |
|---|---|---|---|---|---|---|---|---|---|
| Example 20 | 2 | 8 | 3.0 | 6 | 22 | 3.1 | 2.1 | 33.4 | 6.0 |
| Example 21 | 2 | 8 | 3.0 | 6 | 22 | 3.1 | 2.1 | 33.4 | 6.0 |
| Example 22 | 2 | 8 | 3.0 | 3 | 22 | 6.2 | 2.1 | 33.4 | 6.0 |
| Example 23 | 2 | 8 | 3.0 | 10 | 22 | 1.8 | 2.1 | 33.4 | 6.0 |
| Example 24 | 2 | 8 | 3.0 | 6 | 2 | 0.3 | 2.1 | 33.4 | 6.0 |
| Example 25 | 2 | 8 | 3.0 | 6 | 15 | 2.1 | 2.1 | 33.4 | 6.0 |
| Example 26 | 2 | 8 | 3.0 | 6 | 30 | 4.2 | 2.1 | 33.4 | 6.0 |
| Example 27 | 2 | 8 | 0.5 | 6 | 22 | 3.1 | 2.1 | 200.0 | 6.0 |
| Example 28 | 2 | 8 | 5.6 | 6 | 22 | 3.1 | 2.1 | 17.9 | 6.0 |
| Example 29 | 2 | 8 | 5.0 | 6 | 22 | 3.1 | 2.1 | 20.0 | 6.0 |
| Example 30 | 2 | 6 | 3.0 | 6 | 22 | 3.1 | 1.6 | 33.4 | 6.0 |
| Example 31 | 2 | 25 | 3.0 | 6 | 22 | 3.1 | 6.7 | 33.4 | 6.0 |
| Example 32 | 0.2 | 8 | 3.0 | 6 | 22 | 3.1 | 0.2 | 33.4 | 6.0 |
| Example 33 | 4 | 8 | 3.0 | 6 | 22 | 3.1 | 4.3 | 33.4 | 6.0 |
| Example 34 | 2 | 8 | 3.0 | 6 | 22 | 3.1 | 2.1 | 33.4 | 1.2 |
| Example 35 | 2 | 8 | 3.0 | 6 | 22 | 3.1 | 2.1 | 33.4 | 11.9 |
| Example 36 | 2 | 8 | 3.0 | 6 | 22 | 3.1 | 2.1 | 33.4 | 6.0 |
| Example 37 | 2 | 8 | 3.0 | 6 | 22 | 3.1 | 2.1 | 33.4 | 6.0 |
| Example 38 | 2 | 8 | 3.0 | 6 | 22 | 3.1 | 2.1 | 33.4 | 6.0 |
| Example 39 | 2 | 8 | 3.0 | 6 | 22 | 3.1 | 2.1 | 33.4 | 6.0 |
| Example 40 | 2 | 20 | 3.0 | 6 | 22 | 3.1 | 2.7 | 33.4 | 6.0 |
| Example 41 | 2 | 8 | 3.0 | 6 | 22 | 3.1 | 2.1 | 33.4 | 6.0 |
| Example 42 | 2 | 8 | 3.0 | 6 | 22 | 3.1 | 2.1 | 33.4 | 6.0 |
| Example 43 | 2 | 8 | 3.0 | 6 | 22 | 3.1 | 2.1 | 33.4 | 6.0 |
| Example 44 | / | / | / | 6 | 22 | 3.1 | / | / | 6.0 |
| Example 45 | 2 | 8 | 0.2 | 6 | 22 | 3.1 | 2.1 | 500 | 6.0 |
| Example 46 | 2 | 4 | 3.0 | 6 | 22 | 3.1 | 1.1 | 33.4 | 6.0 |
| Example 47 | 3 | 20 | 3.0 | 6 | 22 | 3.1 | 10.0 | 33.4 | 6.0 |
| Example 48 | 2 | 8 | 10.0 | 6 | 22 | 3.1 | 2.7 | 10 | 6.0 |
| Example 49 | 2 | 15 | 3.0 | 6 | 22 | 3.1 | 2.2 | 33.4 | 6.0 |
| Example 50 | 2 | 8 | 3.0 | 6 | 22 | 3.1 | 2.1 | 33.4 | 14.3 |
| Example 51 | 2 | 8 | 3.0 | 6 | 22 | 3.0 | 2.1 | 33.4 | 6.2 |
| Example 52 | 2 | 8 | 3.0 | 6 | 22 | 3.2 | 2.1 | 33.4 | 5.7 |
| Example 53 | 2 | 8 | 3.0 | 6 | 22 | 3.1 | 2.1 | 33.4 | 6.0 |
| Example 54 | 2 | 8 | 3.0 | 6 | 22 | 3.1 | 0.9 | 33.4 | 6.0 |
| Example 55 | 2 | 8 | 3.0 | 6 | 22 | 3.0 | 1.0 | 33.4 | 6.2 |

(continued)

| | Dv50 of inorganic material (μm) | Thickness of inorganic coating (μm) | Width of inorganic coating (mm) | Width of positive electrode tab (mm) | Number of positive electrode tabs | $(C \times N)/W$ | $(H \times D_2)/D_1$ | B/A | E/F |
|---|---|---|---|---|---|---|---|---|---|
| Example 56 | 2 | 8 | 3.0 | 6 | 22 | 3.1 | 2.1 | 33.4 | 0.6 |
| Example 57 | 4 | 25 | 3.0 | 6 | 22 | 3.1 | 13.3 | 33.4 | 6.0 |
| Comparative example 1 | 2 | 8 | 3.0 | 6 | 22 | 3.2 | 2.1 | 33.4 | 5.7 |
| Comparative example 2 | 2 | 8 | 3.0 | 6 | 22 | 2.9 | / | 33.4 | 6.3 |
| Comparative example 3 | 2 | 8 | 3.0 | 6 | 1 | 0.1 | 2.1 | 33.4 | 6.0 |
| Comparative example 4 | 2 | 8 | 3.0 | 2 | 22 | 9.2 | 2.1 | 33.4 | 6.0 |

Test example

1. The capacities per gram of the discharge of the lithium-ion secondary batteries prepared in the aforementioned examples and comparative examples were tested, which included the following steps:

Charge and discharge were performed at a test temperature of 25°C and a test voltage interval of 3.0 V-4.3 V, where the rate of charge and discharge was 0.5C/0.5C, and the cut-off current was 0.025C.
The test results were shown in Table 3.

2. The safety performance test was performed for the lithium-ion secondary batteries prepared in the aforementioned examples and comparative examples, which included the following steps:
With 20 lithium-ion secondary batteries as a group, in an environment at 25°C, the lithium-ion secondary batteries were charged at a constant current to 4.3 V at a rate of 0.5 C, and charged at a constant voltage to a cut-off current of 0.025 C, and left to stand for 2 h, and then the fully-charged battery was placed in a hot box to heat up at a rate of 5°C/min from normal temperature to 132°C, and maintained for 60 min. A battery without explosion or ignition was judged as PASS, otherwise it was judged as FAIL. The test results were shown in Table 3.

3. The lithium-ion secondary batteries prepared in the aforementioned examples and comparative examples were tested for the discharge performance at a low temperature, which includes the following steps:
Under the ambient temperature (25 ± 3)°C, the batteries were first discharged to 3.0 V at 0.2 C, and then left to stand for 5 min; then, discharged at 0.7 C, and when the voltage on cell end reached the charge voltage limit (4.3 V), it was changed at a constant voltage. When the charge current was ≤ 0.02 C, the charge was stopped, and the batteries were left to stand for 5 min, and then discharged to 3.0 V at 0.2 C, and the discharge capacity this cycle was recorded as capacity $Q_1$ at normal temperature. Then, the battery was charged at 0.7 C, and when the voltage on the cell end reached the charge voltage limit, it was changed to a charge at a current voltage. When the charge current was ≤ the cut-off current, the charge was stopped; the fully-charged battery was left to stand at -20 ± 2°C for 4 h, and then discharged to a cut-off voltage of 3.0 V at a current of 0.2 C, and the discharge capacity $Q_2$ was recorded, then the low-temperature discharge capacity retention (%) = $Q_2/Q_1 \times 100\%$. The test results were shown in Table 3.

4. The lithium-ion secondary batteries prepared in the aforementioned examples and comparative examples were tested for the high-temperature cycling performance, which includes the following steps.
The batteries were charged and discharged at a rate of 1.8 C/4.0 C in an environment at a constant temperature of 45°C, with a cut-off voltage ranging from 2.5 V to 4.3 V, and 500 charge-discharge cycles. The initial discharge capacity was recorded as $C_0$, and the discharge capacity after 500 cycles was recorded as $C_1$, and the high-temperature cycling capacity retention (%) = $C_1/C_0 \times 100\%$. The test results were shown in Table 3.

5. The lithium-ion secondary batteries prepared in the aforementioned examples and comparative examples were tested for energy density, which included the following steps.

Charge and discharge were performed at a test temperature of 25°C and a test voltage interval of 3.0 V-4.3 V, where the charge-discharge rate was 0.5 C/0.5 C, the cut-off current was 0.025 C, and the cell energy (in Wh) of the discharge was recorded. The cell weight (in g) was measured, then the energy density (Wh/kg) = discharge energy/(cell weight/1000), and the test results were shown in Table 3.

Table 3

| | Capacity per gram of discharge mAh/g | Oven test Number of passes/number of tests | Low-temperature discharge capacity retention % | High-temperature cycling capacity retention after 500 cycles % | Energy density Wh/kg |
|---|---|---|---|---|---|
| Example 1 | 215.0 | 18/20 PASS | 80.5 | 89.3 | 302.8 |
| Example 2 | 212.3 | 19/20 PASS | 81.2 | 91.2 | 293.1 |
| Example 3 | 213.0 | 19/20 PASS | 80.7 | 90.5 | 295.6 |
| Example 4 | 217.8 | 16/20 PASS | 78.3 | 87.6 | 310.3 |
| Example 5 | 210.5 | 19/20 PASS | 81.0 | 92.4 | 292.6 |
| Example 6 | 212.6 | 18/20 PASS | 80.9 | 92.0 | 294.7 |
| Example 7 | 215.6 | 18/20 PASS | 79.3 | 87.8 | 304.5 |
| Example 8 | 217.3 | 17/20 PASS | 77.3 | 86.5 | 311.2 |
| Example 9 | 218.4 | 19/20 PASS | 79.2 | 91.2 | 314.5 |
| Example 10 | 216.5 | 19/20 PASS | 77.4 | 92.6 | 308.1 |
| Example 11 | 216.8 | 20/20 PASS | 75.2 | 93.7 | 308.8 |
| Example 12 | 213.6 | 16/20 PASS | 83.6 | 87.8 | 297.6 |
| Example 13 | 215.4 | 17/20 PASS | 81.4 | 88.1 | 301.6 |
| Example 14 | 214.8 | 20/20 PASS | 79.2 | 90.2 | 302.5 |
| Example 15 | 214.6 | 20/20 PASS | 78.3 | 91.5 | 301.8 |
| Example 16 | 215.3 | 15/20 PASS | 82.8 | 87.2 | 303.7 |
| Example 17 | 215.1 | 16/20 PASS | 82.3 | 88.0 | 302.9 |
| Example 18 | 214.7 | 19/20 PASS | 79.2 | 89.9 | 302.1 |
| Example 19 | 214.8 | 19/20 PASS | 77.6 | 90.4 | 302.2 |
| Example 20 | 215.5 | 18/20 PASS | 83.5 | 87.1 | 303.9 |
| Example 21 | 214.8 | 19/20 PASS | 76.7 | 90.2 | 302.5 |
| Example 22 | 214.8 | 16/20 PASS | 79.3 | 89.5 | 305.2 |
| Example 23 | 215.2 | 19/20 PASS | 81.4 | 89.8 | 299.8 |
| Example 24 | 214.7 | 12/20 PASS | 74.2 | 89.2 | 308.8 |
| Example 25 | 214.9 | 16/20 PASS | 76.5 | 88.9 | 305.2 |
| Example 26 | 215.6 | 19/20 PASS | 82.4 | 88.7 | 298.5 |
| Example 27 | 215.0 | 8/20 PASS | 80.3 | 88.9 | 309.2 |
| Example 28 | 215.1 | 17/20 PASS | 79.8 | 89.6 | 307.6 |
| Example 29 | 215.0 | 20/20 PASS | 80.1 | 89.5 | 297.9 |
| Example 30 | 214.9 | 15/20 PASS | 79.8 | 88.9 | 305.6 |
| Example 31 | 215.0 | 20/20 PASS | 78.2 | 89.3 | 290.6 |

(continued)

| | Capacity per gram of discharge mAh/g | Oven test Number of passes/number of tests | Low-temperature discharge capacity retention % | High-temperature cycling capacity retention after 500 cycles % | Energy density Wh/kg |
|---|---|---|---|---|---|
| Example 32 | 215.1 | 15/20 PASS | 80.2 | 89.5 | 303.5 |
| Example 33 | 214.8 | 20/20 PASS | 79.8 | 88.9 | 301.8 |
| Example 34 | 215.5 | 17/20 PASS | 81.9 | 85.2 | 302.9 |
| Example 35 | 214.6 | 18/20 PASS | 79.3 | 90.7 | 302.1 |
| Example 36 | 214.8 | 16/20 PASS | 78.2 | 88.7 | 302.1 |
| Example 37 | 214.6 | 15/20 PASS | 77.6 | 88.2 | 301.8 |
| Example 38 | 215.1 | 16/20 PASS | 78.5 | 89.1 | 303.0 |
| Example 39 | 214.9 | 17/20 PASS | 79.1 | 88.8 | 302.4 |
| Example 40 | 213.8 | 13/20 PASS | 76.2 | 91.3 | 300.6 |
| Example 41 | 214.2 | 18/20 PASS | 75.1 | 86.5 | 301.8 |
| Example 42 | 213.1 | 15/20 PASS | 79.5 | 84.1 | 300.8 |
| Example 43 | 213.6 | 13/20 PASS | 78.1 | 82.6 | 301.3 |
| Example 44 | 215.2 | 6/20 PASS | 81.3 | 90.1 | 315.8 |
| Example 45 | 215.1 | 8/20 PASS | 80.9 | 89.6 | 313.6 |
| Example 46 | 215.3 | 11/20 PASS | 79.6 | 90.1 | 310.7 |
| Example 47 | 215.3 | 16/20 PASS | 80.1 | 89.7 | 299.6 |
| Example 48 | 215.0 | 20/20 PASS | 79.2 | 88.7 | 280.8 |
| Example 49 | 214.2 | 15/20 PASS | 79.0 | 88.6 | 291.5 |
| Example 50 | 212.6 | 19/20 PASS | 78.1 | 91.4 | 302.6 |
| Example 51 | 216.1 | 13/20 PASS | 87.6 | 82.4 | 306.8 |
| Example 52 | 215.8 | 19/20 PASS | 76.4 | 92.8 | 304.3 |
| Example 53 | 215.5 | 14/20 PASS | 73.5 | 81.3 | 304.1 |
| Example 54 | 213.0 | 6/20 PASS | 71.8 | 84.5 | 301.9 |
| Example 55 | 210.1 | 6/20 PASS | 70.6 | 85.7 | 283.1 |
| Example 56 | 216.1 | 8/20 PASS | 71.3 | 88.3 | 305.6 |
| Example 57 | 215.3 | 15/20 PASS | 79.1 | 88.7 | 292.6 |
| Comparative example 1 | 215.5 | 3/20 PASS | 72.5 | 91.6 | 303.8 |
| Comparative example 2 | 216.3 | 3/20 PASS | 84.7 | 80.2 | 305.7 |
| Comparative example 3 | 215.1 | 4/20 PASS | 69.4 | 75.4 | 314.6 |
| Comparative example 4 | 214.8 | 5/20 PASS | 70.1 | 76.8 | 309.2 |

From Tables 1-3, it can be seen that:
the lithium-ion secondary batteries in Examples 1-57 had higher comprehensive performance than those in Comparative examples 1-4, where in the oven test of Example 5, the number of passes/the number of tests could be up to 19/20PASS, the corresponding low-temperature discharge capacity retention was 81.0%, and the 500-cycle high-temperature cycling capacity retention was 92.4%. In the Comparative example, although the high-temperature cycling performance of Comparative example 1 was relatively high, the number of passes/the number of tests was only 3/20 PASS in the oven test. The low-temperature discharge performance of Comparative example 2 was relatively good, but the number of passes/the number of tests in the corresponding oven test was only 3/20 PASS, and the high-temperature cycling capacity retention was only 80.2%. The oven safety performance, low-temperature discharge performance and high-temperature cycling performance in Comparative examples 3 and 4 were all low. It can be seen that the lithium-ion secondary battery in the present disclosure has good low-temperature discharge performance, high-temperature cycling performance and safety performance.

5. The positive electrode plates in the aforementioned Examples and Comparative examples were subjected to ICP testing, which included the following steps.

1) Charge and discharge were performed at a test temperature of 25°C and a test voltage interval of 3.0 V-4.3 V, where the rate of charge and discharge was 0.5 C/0.5 C, and the cut-off current was 0.025 C, and at this time the battery was 100% SOC. Under this state, the disassembling was performed to obtain a positive electrode plate. The positive electrode plate was soaked in a solution of dimethyl carbonate (DMC) for 30 min, and then taken out and dried in an oven at 120°C for 6 h.

2) The dried electrode plate was placed in a tube furnace for high-temperature sintering, the sintering temperature of the tube furnace was set to 300°C, and the sintering time was 4 h. After the completion of sintering, natural cooling was performed, and the cooled electrode plate was placed in a sealed glass bottle.

3) The glass bottle containing the electrode plate was placed in an ultrasonic machine for 15 min of ultrasonication, and then the powder was gently rubbed to obtain a positive electrode powder in the state of 100% OC.

4) The aforementioned positive electrode powder was tested by atomic absorption spectroscopy (ICP), so as to obtain the content of each element in the positive electrode powder.

It should be finally noted that the forgoing examples are merely used for illustrating, rather than limiting, the technical solutions of the present disclosure. Although the disclosure has been described in details with reference to the foregoing examples, those of ordinary skill in the art should understand that the technical solutions described in the foregoing embodiments may still be modified, or some or all of the technical features thereof may be equivalently substituted; and the modifications or substitutions do not make the essence of the corresponding technical solutions depart from the scope of the technical solutions in the examples of the disclosure.

## Claims

1. A lithium-ion secondary battery, characterize in that the lithium-ion secondary battery comprises a positive electrode plate; the positive electrode plate comprises a positive electrode current collector provided with N positive electrode tabs (3), and $N \geq 2$; at least a part of a functional surface of the positive electrode current collector is provided with a positive electrode functional layer comprising a positive electrode active material; and the positive electrode active material comprises a monocrystal ternary material and a polycrystal ternary material;

the monocrystal ternary material has a chemical composition of Formula 1,

$$Li_pMe_m(Ni_xCo_yMn_z)O_2 \qquad \text{Formula 1}$$

in formula 1, $0.9 \leq p \leq 1.1$, $0.01 \leq m \leq 0.5$, $0.6 \leq x \leq 0.98$, $0 \leq y \leq 0.4$, $0 \leq z \leq 0.4$, and Me comprises at least one of Al, Mg, Zr, B, Y, Sr, W, Ti, Nb, Mo, La, Sb or Sr;
the polycrystal ternary material has a chemical composition of Formula 2,

$$Li_qMe_n(Ni_aCo_bMn_c)O_2 \qquad \text{Formula 2}$$

in formula 2, $0.9 \leq q \leq 1.1$, $0.01 \leq n \leq 0.5$, $0.6 \leq a \leq 0.98$, $0 \leq b \leq 0.4$, $0 \leq c \leq 0.4$, and Me comprises at least one of Al, Mg, Zr, B, Y, Sr, W, Ti, Nb, Mo, La, Sb or Sr;
the lithium-ion secondary battery satisfies Formula 3,

$$0.2 \leq (C \times N)/W \leq 7.5 \qquad \text{Formula 3}$$

in formula 3, C is a molar content of nickel element in transition metal elements in the positive electrode active material; and W is a width of the positive electrode tab, in mm.

2. The lithium-ion secondary battery according to claim 1, characterize in that the width W of the positive electrode tab is 3 mm-10 mm, and/or the N is 2-60.

3. The lithium-ion secondary battery according to claim 1 or 2, characterize in that a median particle size Dv50 of the monocrystal ternary material is less than a median particle size Dv50 of the polycrystal ternary material; and preferably, the median particle size Dv50 of the monocrystal ternary material is 1 $\mu$m-8 $\mu$m, and/or, the median particle size Dv50 of the polycrystal ternary material is 8 $\mu$m-18 $\mu$m.

4. The lithium-ion secondary battery according to any of claims 1-3, characterize in that a median particle size Dv50 of primary particles in the polycrystal ternary material is 200 nm-800 nm, and/or, a median particle size Dv50 of the positive electrode active material is 2 $\mu$m-15 $\mu$m.

5. The lithium-ion secondary battery according to any of claims 1-4, characterize in that the positive electrode active material comprises, in mass content percentage: 10 wt%-90 wt% of the monocrystal ternary material and 10 wt%-90 wt% of the polycrystal ternary material.

6. The lithium-ion secondary battery according to any of claims 1-5, characterize in that the positive electrode current collector comprises a positive electrode current collector matrix (1) and an extension (2), the extension (2) is located on one side of the positive electrode current collector matrix (1), the extension (2) forms the positive electrode tabs (3), and at least a part of the functional surface of the positive electrode current collector matrix (1) is provided with the positive electrode functional layer.

7. The lithium-ion secondary battery according to any of claims 1-6, characterize in that a lithium/nickel mixing ratio in the monocrystal ternary material is 0.15%-5%, and/or, a lithium/nickel mixing ratio in the polycrystal ternary material is 0.5%-8%.

8. The lithium-ion secondary battery according to any of claims 1-7, characterize in that the positive electrode functional layer comprises a positive electrode active layer (12) and an inorganic coating (11) adjacent to each other, and the inorganic coating (11) is located between the positive electrode active layer (12) and the positive electrode tab (3);

   preferably, a width of the inorganic coating is 0.5 mm-5 mm, and/or, a thickness of the inorganic coating is 2 $\mu$m-25 $\mu$m; and
   preferably, the inorganic coating comprises at least one of boehmite, $BaSO_4$, $CaSiO_3$, $CaSiO_4$, $Al_2O_3$ and $TiO_2$.

9. The lithium-ion secondary battery according to claim 8, characterize in that the lithium-ion secondary battery satisfies Formula 4 and/or Formula 5,

$$0.2 \le (H \times D_2)/D_1 \le 10 \quad \text{Formula 4}$$

   in formula 4, H is a thickness of the inorganic coating, $D_1$ is a particle size Dv99 of the monocrystal ternary material, $H \ge D_1$, and $D_2$ is a median particle size Dv50 of the inorganic material;

$$5 \le B/A \le 300 \quad \text{Formula 5}$$

   in formula 5, A is an orthographic projection area of the inorganic coating on the positive electrode current collector, and B is an area of the positive electrode plate; and
   preferably, the particle size Dv99 of the monocrystal ternary material is 6 $\mu$m-12 $\mu$m, and/or, the median particle size Dv50 of the inorganic material is 0.2 $\mu$m-4 $\mu$m.

10. The lithium-ion secondary battery according to any of claims 1-9, characterize in that the lithium-ion secondary battery further comprises a separator, the separator comprises a substrate and a coating, and the coating comprises a polymer layer and/or a ceramic layer;

   preferably, a thickness of the substrate is 3 $\mu$m-10 $\mu$m, and/or, a thickness of the coating is 1 $\mu$m-7 $\mu$m;
   preferably, a thickness of the polymer layer is 0.5 $\mu$m-4 $\mu$m, and/or, a thickness of the ceramic layer is 0.5 $\mu$m-3 $\mu$m; and
   preferably, an areal density of the separator is 3 g/m2-20 g/m2.

11. The lithium-ion secondary battery according to any of claims 1-10, characterize in that the lithium-ion secondary battery further comprises an electrolyte, and the electrolyte comprises a nitrile additive;

preferably, the electrolyte satisfies Formula 6,

$$1 \le E/F \le 17 \quad \text{Formula 6}$$

in formula 6, E is a mass content percentage of the nitrile additive in the electrolyte, in wt%; F is a molar content of the nickel element in the transition metal elements in the positive electrode active material;
preferably, the content E of the nitrile additive by mass percentage in the electrolyte is 1 wt%-10 wt%; and
preferably, the nitrile additive comprises at least one of succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,5-dioxa-pimelonitrile, 1,4-di(cyanoethoxy)butane, ethylene glycol di(2-cyanoethyl)ether, diethylene glycol di(2-cyanoethyl) ether, triethylene glycol di(2-cyanoethyl) ether, tetraethylene glycol di(2-cyanoethyl)ether, 3,6,9,12,15,18-hexaoxaeicosanoic acid dinitrile, 1,3-bis(2-cyanoethoxy)propane, 1,4-bis(2-cyanoethoxy)butane, 1,5-bis(2-cyanoethoxy)pentane, ethylene glycol di(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 1,3,5-pentanetricarbonitrile, 1,2,3-propanetricarbonitrile, 1,3,6-hexanetricarbonitrile, glycerol tricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane and 1,2,5-tris(cyanoethoxy)pentane.

12. The lithium-ion secondary battery according to any of claims 1-11, characterize in that the lithium-ion secondary battery comprises a cell formed by sequentially stacking and winding a positive electrode plate, a separator and a negative electrode plate;
or, the lithium-ion secondary battery comprises sequentially-stacked cells, and the cell comprises a positive electrode plate, a separator and a negative electrode plate that are sequentially stacked.

FIG. 1

FIG. 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/124694 A1 (HIKATA SEIICHI [JP] ET AL) 20 May 2010 (2010-05-20) | 1-7, 10-12 | INV. H01M4/525 |
| A | * figs. 1, 2; [0006]; [0021]f; [0070]; [0073] * | 8,9 | |
| | ----- | | |
| Y | CN 117 457 890 A (SHENZHEN BTR NANOMETER TECH CO LTD) 26 January 2024 (2024-01-26) | 1-7, 10-12 | |
| A | * [0152-7] with [0121] * | 8,9 | |
| | ----- | | |

**TECHNICAL FIELDS SEARCHED (IPC)**

H01M

The present search report has been drawn up for all claims

| Place of search | Date of completion of the search | Examiner |
|---|---|---|
| Munich | 16 January 2026 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 4026

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2026

| Patent document cited in search report | | Publication date | Patent family member(s) | | Publication date |
|---|---|---|---|---|---|
| US 2010124694 | A1 | 20-05-2010 | EP | 2187466 A1 | 19-05-2010 |
| | | | EP | 2448041 A1 | 02-05-2012 |
| | | | EP | 2448042 A1 | 02-05-2012 |
| | | | JP | 2010118315 A | 27-05-2010 |
| | | | US | 2010124694 A1 | 20-05-2010 |
| CN 117457890 | A | 26-01-2024 | CN | 117457890 A | 26-01-2024 |
| | | | CN | 120604355 A | 05-09-2025 |
| | | | EP | 4576259 A1 | 25-06-2025 |
| | | | KR | 20250044788 A | 01-04-2025 |
| | | | MA | 71202 A1 | 31-12-2025 |
| | | | US | 2025163611 A1 | 22-05-2025 |
| | | | WO | 2025077631 A1 | 17-04-2025 |

EPO FORM P0459

For more details about this annex : see Official Journal of the European Patent Office, No. 12/82